(19) Europäisches Patentamt
European Patent Office
Office européen des brevets

(11) **EP 3 670 460 A1**

(12) **EUROPÄISCHE PATENTANMELDUNG**

(43) Veröffentlichungstag:
**24.06.2020   Patentblatt 2020/26**

(51) Int Cl.:
***C03C 3/087*** *(2006.01)*   ***C03C 4/20*** *(2006.01)*

(21) Anmeldenummer: **19217061.1**

(22) Anmeldetag: **17.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.12.2018   DE 102018133413**

(71) Anmelder: **Schott AG**
**55122 Mainz (DE)**

(72) Erfinder:
• **Fotheringham, Dr. Ulrich**
  **65191 Wiesbaden (DE)**
• **Naß, Dr. Peter**
  **55120 Mainz (DE)**
• **Tratzky, Dr. Stephan**
  **92660 Neustadt/Wn. (DE)**
• **Ritter, Dr. Simone Monika**
  **55128 Mainz (DE)**
• **Eichholz, Rainer**
  **60323 Frankfurt am Main (DE)**
• **Berndhäuser, Dr. Christoph**
  **55268 Nieder-Olm (DE)**

(74) Vertreter: **Fuchs Patentanwälte Partnerschaft mbB**
**Westhafenplatz 1**
**60327 Frankfurt am Main (DE)**

(54) **CHEMISCH BESTÄNDIGE, BOR- UND ALKALI-FREIE GLÄSER**

(57)    Die Erfindung betrifft Gläser und Glasprodukte mit sehr guter Lauge- und Säurebeständigkeit, hydrolytischer Beständigkeit sowie einem gewünschten thermischen Ausdehnungskoeffizienten. Erfindungsgemäß sind auch Herstellungsverfahren solcher Gläser und ihre Verwendungen. Die Gläser können beispielsweise im Bereich Rohrglas, insbesondere Pharmarohr und Lampenrohr, sowie für faserverstärkte Kunststoffe verwendet werden. Die Erfindung betrifft insbesondere auch ein Pharmapackmittel mit einem chemisch beständigen Glas, das bevorzugt insbesondere als Primärverpackungsmaterial in der Pharmaindustrie geeignet ist.

**EP 3 670 460 A1**

**EP 3 670 460 A1**

**Beschreibung**

Die Erfindung betrifft Gläser und Glasprodukte mit sehr guter Lauge- und Säurebeständigkeit, hydrolytischer Beständigkeit sowie einem gewünschten thermischen Ausdehnungskoeffizienten. Erfindungsgemäß sind auch Herstellungsverfahren solcher Gläser und ihre Verwendungen. Die Gläser können beispielsweise im Bereich Rohrglas, insbesondere Pharmarohr und Lampenrohr, sowie für faserverstärkte Kunststoffe verwendet werden. Die Erfindung betrifft insbesondere auch ein Pharmapackmittel mit einem chemisch beständigen Glas, das bevorzugt insbesondere als Primärverpackungsmaterial in der Pharmaindustrie geeignet ist.

An solche Pharmapackmittel werden hohe Anforderungen gestellt. Insbesondere ist eine hohe chemische Beständigkeit von Bedeutung, also eine sehr gute Laugen-, Säure- und hydrolytische Beständigkeit. Im Allgemeinen wird noch ein bestimmter thermischer Ausdehnungskoeffizient gewünscht.

Ferner sollen die hierfür verwendeten Gläser delaminationsfrei sein, das heißt, dass sich im Gebrauch keine Schichten aus dem Glas ablösen dürfen, die das verpackte Pharmamittel verunreinigen würden. Eine Ursache für die Delamination ist das Verdampfen von Alkaliboraten oder Bor- bzw. Alkali-Hydroxiden, während der Heißumformung zu Pharmabehältern. Dies kann grundsätzlich durch die Bor-freien und Alkali-freien Gläser der vorliegenden Erfindung verhindert werden.

Stand der Technik

Chemisch beständige Gläser sind aus dem Stand der Technik bekannt. Für die Charakterisierung der chemischen Beständigkeit gibt es eine Fülle von Vorschriften und Normen, insbesondere ISO 695 für die Laugenbeständigkeit, ISO 719/720 für die hydrolytische sowie ISO 1776 und DIN 12116 für die Säurebeständigkeit.

EP0510544, US9061938, US9670087, JPH05155638, US9586854, DE1816391, US4012263, EP0048120, WO2013130695, WO2012103194, WO0242233, WO2015009483, und DE102017102900 beschreiben chemisch beständige Gläser. Allerdings fehlt es an Gläsern, die die gewünschten thermischen Ausdehnungseigenschaften mit einer umfassenden, auch die Säureresistenz einschließenden chemischen Beständigkeit verbinden.

Aufgabe

Es ist daher eine Aufgabe der vorliegenden Erfindung die Nachteile aus dem Stand der Technik zu überwinden. Insbesondere sollen Gläser bereitgestellt werden, die vorteilhafte thermische Ausdehnungseigenschaften mit einer umfassenden, auch die Säureresistenz einschließenden chemischen Beständigkeit verbinden. Die Gläser sollten zudem in modernen Rohrzugfertigungsverfahren, Flachglas- oder Faserziehverfahren herstellbar sein.

Die Aufgabe wird durch die Gegenstände der Patentansprüche gelöst.

Beschreibung der Erfindung

Die Aufgabe wird durch eine gezielte Kombination von stöchiometrischen Gläsern, also Gläsern, die in derselben Stöchiometrie auch als Kristalle existieren und deren Eigenschaft wegen der - wie in der Literatur an vielen Beispielen durch NMR-Messungen o.ä. überprüft - im allgemeinen identischen Topologie der Baugruppen jeweils für Glas und Kristall als sehr ähnlich angenommen werden können, gelöst. Hierfür werden solche stöchiometrischen Gläser ausgewählt, deren Mischung ein Verhalten im Sinne einer Lösung der erfindungsgemäßen Aufgabe erzielbar macht. In dieser Anmeldung werden diese stöchiometrischen Gläser auch als "konstituierende Phasen" bezeichnet.

Es ist kein neues Konzept, Gläser anhand der ihnen zuzuordnenden konstituierenden Phasen zu beschreiben. Durch die Angabe der Grundgläser lassen sich Rückschlüsse auf die chemische Struktur eines Glases ziehen (vgl. Conradt R: "Chemical structure, medium range order, and crystalline reference state of multicomponent oxide liquids and glasses", in Journal of Non-Crystalline Solids, Volumes 345-346, 15 October 2004, Pages 16-23).

Die vorliegende Erfindung betrifft ein Glas mit einer Zusammensetzung, die durch die folgenden das Glas konstituierenden Phasen gekennzeichnet ist; dabei wird dieses durch die konstituierenden Phasen definierte Grundsystem erfindungsgemäß durch die angegebenen Zusammensetzungsbereiche eingeschränkt:

**Tabelle 1**

| konstituierende Phase | Min (Mol%) | Max (Mol%) |
|---|---|---|
| Siliziumdioxid | 20 | 80 |
| Wollastonit | 0 | 40 |
| Cordierit | 0 | 30 |

2

(fortgesetzt)

| konstituierende Phase | Min (Mol%) | Max (Mol%) |
|---|---|---|
| Anorthit | 0 | 40 |
| Strontium-Feldspat | 0 | 40 |
| Celsian | 0 | 20 |
| Hardystonit | 0 | 40 |
| Titanit | 0 | 10 |
| Gittinsit | 0 | 15 |

Die Grundsysteme beziehen sich ausdrücklich auf die jeweils genannten konstituierenden Phasen und nicht auf die einfachen Oxide. Jedoch folgt aus der Aufgabenstellung und dem engen Zusammenhang zwischen dem Aluminiumgehalt und der Säurebeständigkeit gemäß DIN 12116, dass die Gläser der Erfindung weniger als 11,5 Mol % $Al_2O_3$ enthalten.

Ferner soll das erfindungsgemäße Glas weitere Bedingungen erfüllen, die mit der Zusammensetzung aus konstituierenden Phasen bzw. der Zusammensetzung aus einfachen Oxiden in formelmäßigen Zusammenhängen stehen, die weiter unten aufgezeigt werden.

Da beide Sorten Zusammenhänge - solche zur in konstituierenden Phasen angegebenen Zusammensetzung und solche zur in einfachen Oxide angegebenen Zusammensetzung - nebeneinander verwendet werden, geben wir zunächst Umrechnungsmatrizen für die gegenseitige Umrechnung beider Zusammensetzungsangaben an.

**Umrechnung von der Zusammensetzung aus konstituierenden Phasen in Zusammensetzung aus einfachen Oxiden und umgekehrt**

Die Zusammensetzung aus konstituierenden Phasen wird zum Zweck der Umrechnung in einer normierten Form angegeben, die da lautet:

**Tabelle 2**

| konstituierende Phase | Formel (auf ein einfaches Oxid normiert) |
|---|---|
| Siliziumdioxid | SiO2 |
| Wollastonit | (CaO·SiO2)/2 |
| Cordierit | (2MgO·2Al2O3·5SiO2)/9 |
| Anorthit | (CaO·Al2O3·2SiO2)/4 |
| Strontium-Feldspat | (SrO·Al2O3·2SiO2)/4 |
| Celsian | (BaO·Al2O3·2SiO2)/4 |
| Hardystonit | (2CaO·ZnO2SiO2)/5 |
| Titanit | (CaO·TiO2·SiO2)/3 |
| Gittinsit | (CaO·ZrO2·2SiO2)/4 |

Die Umrechnung dieser Zusammensetzungen in eine Zusammensetzungsangabe in Mol-% bezüglich der folgenden einfachen Oxide ...

**Tabelle 3**

| # | Oxid |
|---|---|
| 1. | $SiO_2$ |
| 2. | $TiO_2$ |
| 3. | $ZrO_2$ |

(fortgesetzt)

| # | Oxid |
|---|------|
| 4. | Al$_2$O$_3$ |
| 5. | ZnO |
| 6. | MgO |
| 7. | CaO |
| 8. | SrO |
| 9. | BaO |

... erfolgt mit Hilfe der hier angegebenen Matrix. Dabei wird die Zusammensetzungsangabe in Mol-% hinsichtlich der Grundgläser als Spaltenvektor von rechts an die Matrix multipliziert:

**Tabelle 4: Matrix**

$$
\begin{pmatrix}
1 & 1/2 & 5/9 & 2/4 & 2/4 & 2/4 & 2/5 & 1/3 & 2/4 \\
0 & 0 & 0 & 0 & 0 & 0 & 0 & 1/3 & 0 \\
0 & 0 & 0 & 0 & 0 & 0 & 0 & 0 & 1/4 \\
0 & 0 & 2/9 & 1/4 & 1/4 & 1/4 & 0 & 0 & 0 \\
0 & 0 & 0 & 0 & 0 & 0 & 1/5 & 0 & 0 \\
0 & 0 & 2/9 & 0 & 0 & 0 & 0 & 0 & 0 \\
0 & 1/2 & 0 & 1/4 & 0 & 0 & 2/5 & 1/3 & 1/4 \\
0 & 0 & 0 & 0 & 1/4 & 0 & 0 & 0 & 0 \\
0 & 0 & 0 & 0 & 0 & 1/4 & 0 & 0 & 0
\end{pmatrix}
\times
\begin{pmatrix}
SiO_2 \\
(CaO \cdot SiO_2)/2 \\
(2MgO \cdot 2Al_2O_3 \cdot 5SiO_2)/9 \\
(CaO \cdot Al_2O_3 \cdot 2SiO_2)/4 \\
(SrO \cdot Al_2O_3 \cdot 2SiO_2)/4 \\
(BaO \cdot Al_2O_3 \cdot 2SiO_2)/4 \\
(2CaO \cdot ZnO \cdot 2SiO_2)/5 \\
(CaO \cdot TiO_2 \cdot SiO_2)/3 \\
(CaO \cdot ZrO_2 \cdot 2SiO_2)/4
\end{pmatrix}
$$

Als Ergebnis der Multiplikation des Spaltenvektors an die Matrix erhält man die Zusammensetzung des Glases in Molprozenten.

Umgekehrt lässt sich eine Zusammensetzung in Molprozenten einfach über die jeweilige inverse Matrix in eine Grundglaszusammensetzung überführen. Dabei gelten natürlich nur solche Grundglaszusammensetzungen als erfindungsgemäß, die bei Umrechnung keine negativen Werte für die Grundgläser ergeben.

**Bedeutung der konstituierenden Phasen und deren Auswahl im Hinblick auf die Aufgabe der Erfindung**

Die Zusammensetzung ist im Hinblick auf die das Glas konstituierenden Phasen innerhalb der hierin beschriebenen Grenzen gewählt. Die das Glas konstituierenden Phasen liegen als solche im Glasprodukt selbstverständlich nicht kristallin, sondern amorph vor. Das heißt aber nicht, dass die konstituierenden Phasen im amorphen Zustand völlig andere Baugruppen als im kristallinen Zustand haben. Wie oben gesagt, ist die Topologie der Baugruppen vergleichbar, also z.B. die Koordination der beteiligten Kationen mit umgebenden Sauerstoffatomen oder der sich aus der Koordination und der Stärke der Bindung zwischen diesen Kationen und umgebenden Sauerstoffatomen ergebende interatomare Abstand. Daher lassen sich viele Eigenschaften des Glases der Erfindung gut anhand der konstituierenden Phasen beschreiben, insbesondere um die erfinderische Leistung und die mit der Erfindung überwundenen Probleme darzustellen (vgl. dazu Conradt R., loc. cit.). Dabei kann das Glas natürlich nicht nur unter Verwendung der entsprechenden Kristalle hergestellt werden, sondern auch unter Verwendung der üblichen Glasrohstoffe, solange nur die stöchiometrischen Verhältnisse die Ausbildung der entsprechenden Baugruppen der Grundgläser ermöglichen.

Die Auswahl der Phasen erfolgt im Hinblick auf die chemische Beständigkeit und den thermischen Ausdehnungskoeffizienten. Im Folgenden werden Berechnungsverfahren angegeben, wie sich diese Größen aus einer vorgegebenen Zusammensetzung aus konstituierenden Phasen berechnen lassen. Diese Berechnungsverfahren sind maßgeblich sowohl bei der Auswahl der konstituierenden Phasen als auch bei eben jener Zusammensetzung eines erfindungsgemäßen Glases aus diesen konstituierenden Phasen.

Bei der Suche nach geeigneten Berechnungsverfahren stellt man überraschenderweise fest, dass sich für die genannten Eigenschaften einfache Formeln finden lassen, aus denen sich Kennzahlen oder näherungsweise Werte für diese Eigenschaften berechnen lassen, die wiederum eine schnelle Klassifikation von Glaszusammensetzungen in günstig bzw. ungünstig bezüglich der Aufgabe der Erfindung erlauben.

Der thermische Ausdehnungskoeffizient lässt sich auf die mittlere Bindungsstärke als Kennzahl zurückführen, aus der der Wert des thermischen Ausdehnungskoeffizienten mit Hilfe einer semiempirischen Formel in sehr guter Näherung berechnet werden kann. Erfindungsgemäß liegt der thermische Ausdehnungskoeffizient bevorzugt zwischen 3 und 6 ppm/K, weiter bevorzugt zwischen 3,5 und 5,5 ppm/K, besonders bevorzugt zwischen 4,0 und 5,5 ppm/K. Gemeint ist der nach der u.a. Formel (18) bestimmte Rechenwert für den CTE.

Sowohl die hydrolytische Beständigkeit nach ISO 719/720 als auch die Laugenbeständigkeit nach ISO 695 beinhalten im wesentlichen eine Resistenz des Glases gegen den Angriff von Hydroxylionen. Dabei ist im Falle der ISO 695 die Konzentration der Hydroxylionen in der Lauge dadurch festgelegt, daß eine Pufferlösung mit 0,5 mol/l Natriumhydroxid und 0,25 mol/l Natriumcarbonat verwendet wird. Im Falle der ISO 719/720 wird das Glas in Neutralwasser gegeben, dessen pH-Wert zunächst auf 5,5 eingestellt wird (Überprüfung durch Methylrotindikatorlösung), sich aber durch die Auflösung des Glases sehr rasch in den alkalischen Bereich bewegt. Es entsteht eine Pufferlösung aus den im Glas enthaltenen schwachen Säuren (bzw. Säureanhydriden), v.a. Kieselsäure, und starken Laugen (wie Natriumhydroxid), deren pH im Bereich 9 bis 10 liegt, siehe Susanne Fagerlund, Paul Ek, Mikko Hupa und Leena Hupa: On determining chemical durability of glasses, Glass Technol.: Eur. J. Glass Sci. Technol. A, December 2010, 51 (6), 235-240. Maßgeblich für den pH einer Pufferlösung sind die pKs-Werte der schwachen Säure(n). Durch den pH-Wert der entstehenden Pufferlösung, der sowohl vom Glastyp abhängt als auch mit dem Auflösungsfortschritt steigt, wird die Konzentration der Hydroxylionen festgelegt. Die durch diese Hydroxylionen erfolgende Auflösung erfolgt dann nach demselben Mechanismus wie bei der Laugenbeständigkeitsmessung.

Um ein Glas sowohl laugen- als auch hydrolytisch resistent zu machen, muss damit erstens die Abtragrate beim Test nach ISO 695 auf einen niedrigen Wert festgelegt werden. Diese Abtragrate lässt sich auf zwei Kennzahlen zurückführen, nämlich erstens eine aus topologischen Überlegungen gewonnene Vernetzungszahl (je größer, desto niedriger die Abtragrate) und zweitens die sogenannte optische Basizität des Glases (wiederum: je größer, desto niedriger die Abtragrate). Daraus lässt sich ein sehr guter Näherungswert für die Abtragrate nach ISO695 erhalten.

Zweitens muss der pH-Wert begrenzt werden, der sich während eines Tests nach ISO 719/720 und der dabei erfolgenden Auflösung einer gewissen Glasmenge in der wässrigen Testlösung ergibt. Je höher dieser pH-Wert im Verlaufe des Testes steigt, desto größer ist die Gefahr eines positiven Rückkopplungseffektes: mit steigendem pH steigt die Abtragrate, mit steigender Menge Abtrag in der wässrigen Lösung steigt wiederum deren pH-Wert an usw.

Chemisch beständige Gläser (hydrolytische Klasse HGB I gemäß ISO 719 bzw. hydrolytische Klasse HGA I gemäß ISO 720) erfahren während des Testes typischerweise einen Abtrag, der zu 100 $\mu$mol Glas in der wässrigen Lösung oder weniger führt, wobei der Abtrag im Allgemeinen umso weniger kongruent ist, je geringer er ist.

Da sich ein Vergleich von Gläsern auf feste Verhältnisse beziehen muss, definieren wir jetzt als maßgeblichen pH denjenigen pH, der sich nach als kongruent angenommener Auflösung von 50 $\mu$mol Glas in Neutralwasser ergibt.

Erfindungsgemäß bevorzugt sind Gläser, bei denen dieser pH weniger als 9,15, bevorzugt weniger als 9,10, ganz besonders bevorzugt weniger als 9,05, noch weiter bevorzugt weniger als 9,00, am meisten bevorzugt weniger als 8,95 beträgt. Gemeint ist der basierend auf dem Gleichungssystem (1) berechnete pH-Wert.

Die Abtragrate entsprechend ISO 695 beträgt erfindungsgemäß maximal 81,9 mg/($dm^2$3h), bevorzugt maximal 81,8 mg/($dm^2$3h), weiter bevorzugt maximal 81,7 mg/($dm^2$3h), weiter bevorzugt maximal 81,6 mg/($dm^2$3h), weiter bevorzugt maximal 81,5 mg/($dm^2$3h), weiter bevorzugt maximal 81 mg/($dm^2$3h), weiter bevorzugt maximal 80,5 mg/($dm^2$3h), weiter bevorzugt maximal 80,25 mg/($dm^2$3h), weiter bevorzugt maximal 80 mg/($dm^2$3h), weiter bevorzugt maximal 79 mg/($dm^2$3h), weiter bevorzugt maximal 78 mg/($dm^2$3h), weiter bevorzugt maximal 77 mg/($dm^2$3h), weiter bevorzugt maximal 76 mg/($dm^2$3h), weiter bevorzugt maximal 75 mg/($dm^2$3h). Gemeint ist die Abtragrate, die anhand der Formel (2) berechnet wird.

Schon der erste o.a. genannte Wert liegt um mehr als eine halbe Klassenbreite unterhalb der Grenze zwischen den Laugenklassen 2 und 3 gemäß der ISO 695. Dieser Abstand wird bewusst so groß gewählt, um auch bei eventuellen Toleranzen bei der Vorhersagegenauigkeit der Formel (2) noch einen großen Sicherheitsabstand zur Klasse 3 zu haben.

Ein Säureangriff mit hochkonzentrierter Salzsäure gemäß den in DIN12116 festgelegten Bedingungen beinhaltet das Eindringen von Hydroniumionen in die Glasoberfläche, was ein Aufweichen des Glases (auch und vor allem im elektrostatischen Sinne, da Wasser eine sehr hohe Permeabilität hat und daher die Coulombwechselwirkung erheblich herabsetzt) sowie den Aufbau einer elektrischen Doppelschicht mit dem "Pluspol" in der Glasoberfläche (positiv geladene Hydroniumionen) und dem "Minuspol" in der Säure (Chloridionen) bewirkt. Dies veranlasst ein Hinausdiffundieren der Kationen des Glases und einen Ersatz derselben durch im Gegenzug hereindiffundierende weitere Hydroniumionen, was dann proportional zur Zahl dieser Hydroniumionen zur Netzwerkauflösung und dem sich daraus ergebenden Materialverlust führt.

Die Abtragrate beim Säurebeständigkeitstest lässt sich in guter Näherung mit Hilfe der u.a. Formeln (15, 16) bestimmen.

Bezüglich dem berechneten Wert für die Abtragrate in Säure gemäß DIN12116 wird gefordert, dass dieser < 3,5 mg($dm^2$6h) liegt, bevorzugt < 3 mg($dm^2$6h), besonders bevorzugt < 2,5 mg($dm^2$6h), weiter bevorzugt < 2,4 mg($dm^2$6h), weiter bevorzugt < 2,3 mg($dm^2$6h), ganz besonders bevorzugt < 2 mg($dm^2$6h), weiter bevorzugt < 1,8

mg(dm$^2$6h), noch weiter bevorzugt < 1,5 mg(dm$^2$6h), noch weiter bevorzugt < 1,4 mg(dm$^2$6h), noch weiter bevorzugt < 1,3 mg(dm$^2$6h), am meisten bevorzugt < 1,1 mg(dm$^2$6h).

Im Folgenden werden die Berechnungsverfahren im Detail vorgestellt.

**Berechnung des pH-Wertes in der wässrigen Lösung beim Test der hydrolytischen Beständigkeit**

Die Berechnung des pH-Wertes in wässriger Lösung geht von der Zusammensetzungsangabe in einfachen Oxiden aus. In der verdünnten Lösung der Glasbestandteile gehen die entsprechenden Kationen in die höchstoxidierten Hydroxide über, siehe die Tabelle 5. Die Abgabe eines $H^+$ bzw. $OH^-$ dieser Hydroxide wird jeweils durch einen entsprechenden pKs- bzw. pKb-Wert beschrieben.

Wir beziehen uns beim pH-Wert auf den Wert, der nach Auflösung von 50 $\mu$mol in einem Liter der wässrigen Lösung nach Abkühlung auf Raumtemperatur (25°C) vorliegt.

**Tabelle 5**

| # | Oxid bzw. Anhydrid | Säure bzw. Hydroxid | | |
|---|---|---|---|---|
| 1. | $SiO_2$ | $H_4SiO_4$ | $H_4SiO_4 \rightarrow H_3SiO_4^- + H^+$ | pKs = 9,7 [1] |
| | | | $H_3SiO_4^- \rightarrow H_2SiO_4^{-2} + H^+$ | pKs = 11,9 [1] |
| 2. | $ZrO_2$ | $Zr(OH)_4$ | $Zr(OH)_4 + H_2O \rightarrow Zr(OH)_5^- + H^+$ | pKs = 5,99 [2] |
| | | | $Zr(OH)_3^+ + H_2O \rightarrow Zr(OH)_4 + H^+$ | pKs = 4,6 [2] |
| 3. | $Al_2O_3$ | $Al(OH)_3$ | $Al(OH)_3 + H_2O \rightarrow Al(OH)_4^- + H^+$ | pKs = 12,3 [3] |
| | | | $Al(OH)_2^+ + H_2O \rightarrow Al(OH)_3 + H^+$ | pKs = 5,7 [3] |
| 4. | ZnO | $Zn(OH)_2$ | $Zn^{+2} + H_2O \rightarrow ZnOH^+ + H^+$ | pKs = 9,05 [4] |
| | | | $ZnOH^+ + H_2O \rightarrow Zn(OH)_2 + H^+$ | pKs = 9,75 [4] |
| | | | $Zn(OH)_2 + H_2O \rightarrow Zn(OH)_3^- + H^+$ | pKs = 10,1 [4] |
| | | | $Zn(OH)_3^- + H_2O \rightarrow Zn(OH)_4^- + H^+$ | pKs = 10,05 [4] |
| 5. | MgO | $Mg(OH)_2$ | $Mg(OH)_2 \rightarrow Mg(OH)^+ + OH^-$ | pKb = -2 [5] |
| | | | $Mg(OH)^+ \rightarrow Mg^{++} + OH^-$ | pKb = 2,58 [6] |
| 6. | CaO | $Ca(OH)_2$ | $Ca(OH)_2 \rightarrow Ca(OH)^+ + OH^-$ | pKb = -2 [5] |
| | | | $Ca(OH)^+ \rightarrow Ca^{++} + OH^-$ | pKb = 1,3 [7] |
| 7. | $Na_2O$ | NaOH | $NaOH \rightarrow Na^+ + OH^-$ | pKb = -0,77 [10] |
| 8. | $K_2O$ | KOH | $KOH \rightarrow K^+ + OH^-$ | pKb = -2 [11] |
| 10. | SrO | $Sr(OH)_2$ | $Sr(OH)_2 \rightarrow Sr(OH)^+ + OH^-$ | pKb = -2 [5] |
| | | | $Sr(OH)^+ \rightarrow Sr^{++} + OH^-$ | pKb = 0,82 [12] |
| 11. | BaO | $Ba(OH)_2$ | $Ba(OH)_2 \rightarrow Ba(OH)^+ + OH^-$ | pKb = -2 [5] |

(fortgesetzt)

| # | Oxid bzw. Anhydrid | Säure bzw. Hydroxid | | |
|---|---|---|---|---|
| | | | $Ba(OH)^+ \rightarrow Ba^{++} + OH^-$ | pKb = 0,64 [13] |

[1] Pure Appl. Chem., 1969, Vol. 20, No. 2, pp. 133-236, Ziffer 176; Wert von der dort mit "G40" bezeichneten Quelle.

[2] R.H. Byrne, Inorganic speciation of dissolved elements in seawater: the influence of pH on concentration ratios, Geochem. Trans. 3 (2) (2002) 11-16.

[3] David W. Hendricks, Water Treatment Unit Processes: Physical and Chemical, CRC Taylor and Francis, Boca Raton, London, New York, 2006, S. 307; Werte von den dort mit "4", "5", "11", "12" bezeichneten Quellen.

[4] Artur Krezel, Wolfgang Maret, The biological inorganic chemistry of zinc ions, Archives of Biochemistry and Biophysics (2016), S. 1-17

[5] Wie bei Bariumhydroxid, siehe Pure Appl. Chem., 1969, Vol. 20, No. 2, pp. 133-236, Ziffer 12, gehen wir davon aus, dass die $M(OH)_2 \rightarrow M(OH)^+ + OH^-$ für alle Erdalkali M in jedem Fall vollständig abläuft; wir setzen für diese erste Dissoziation als pKb-Wert den höchsten in dieser Tabelle auftretenden pKb-Wert, nämlich den von Kalilauge, an.

[6] Pure Appl. Chem., 1969, Vol. 20, No. 2, pp. 133-236, Ziffer 115; Wert von der dort mit "S74" bezeichneten Quelle.

[7] Pure Appl. Chem., 1969, Vol. 20, No. 2, pp. 133-236, Ziffer 18; Wert von der dort mit "D9" bezeichneten Quelle.

[10] Pure Appl. Chem., 1969, Vol. 20, No. 2, pp. 133-236, Ziffer 178; Wert von der dort mit "G26" bezeichneten Quelle.

[11] Pure Appl. Chem., 1969, Vol. 20, No. 2, pp. 133-236, Ziffer 164; Wert von der dort mit "K2" bezeichneten Quelle.

[12] Pure Appl. Chem., 1969, Vol. 20, No. 2, pp. 133-236, Ziffer 180; Wert von der dort mit "G26" bezeichneten Quelle.

[13] Pure Appl. Chem., 1969, Vol. 20, No. 2, pp. 133-236, Ziffer 12; Wert von der dort mit "D7" bezeichneten Quelle.

Der pH-Wert folgt bei gegebener Zusammensetzung durch Lösen des Gleichungssystems für die verschiedenen Konzentrationen [...] (für pKs und pKb sind die oben gelisteten Werte einzusetzen):

Gleichungssystem (1)

1. $[H_2SiO_4^{--}][H^+] / [H_3SiO_4^-] = 10^{-pks}$,

2. $[H_3SiO_4^-][H^+] / [H_4SiO_4] = 10^{-pks}$,

3. $[H_2SiO_4^{--}] + [H_3SiO_4^-] + [H_4SiO_4] = 50\ (\mu mol/l)\ ^*\ c_{SiO2}$,

4. $[Zr(OH)_5^-][H^+] / [Zr(OH)_4] = 10^{-pks}$,

5. $[Zr(OH)_4][H^+] / [Zr(OH)_3^+] = 10^{-pks}$,

6. $[Zr(OH)_5^-] + [Zr(OH)_4] + [Zr(OH)_3^+] = 50\ (\mu mol/l)\ ^*\ c_{ZrO2}$,

7. $[Al(OH)_4^-][H^+] / [Al(OH)_3] = 10^{-pks}$

8. $[Al(OH)_3][H^+] / [Al(OH)_2^+] = 10^{-pks}$,

9. $[Al(OH)_4^-] + [Al(OH)_3] + [Al(OH)_2^+] = 50\ (\mu mol/l)\ ^*\ 2\ ^*\ c_{Al2O3}$,

10. $[ZnOH^+][H^+] / [Zn^{++}] = 10^{-pks}$,

11. $[Zn(OH)_2][H^+] / [ZnOH^+] = 10^{-pks}$,

12. $[Zn(OH)_3^-][H^+] / [Zn(OH)_2] = 10^{-pks}$,

13. $[Zn(OH)_4^{--}][H^+] / [Zn(OH)_3^-] = 10^{-pks}$,

14. $[ZnOH^+] + [Zn^{++}] + [Zn(OH)_2] + [Zn(OH)_3^-] + [Zn(OH)_4^{--}] = 50\ (\mu mol/l)\ ^*\ c_{ZnO}$,

15. $[MgOH^+][OH^-] / [Mg(OH)_2] = 10^{-pkb}$

16. $[Mg^{++}][OH^-] / [MgOH^+] = 10^{-pkb}$,

17. $[MgOH^+] + [Mg(OH)_2] + [Mg^{++}] = 50 \; (\mu mol/l) \ast c_{MgO}$,

18. $[CaOH^+][OH^-] / [Ca(OH)_2] = 10^{-pkb}$

19. $[Ca^{++}][OH^-] / [CaOH^+] = 10^{-pkb}$,

20. $[CaOH^+] + [Ca(OH)_2] + [Ca^{++}] = 50 \; (\mu mol/l) \ast c_{CaO}$,

21. $[SrOH^+][OH^-] / [Sr(OH)_2] = 10^{-pkb}$

22. $[Sr^{++}][OH^-] / [SrOH^+] = 10^{-pkb}$,

23. $[SrOH^+] + [Sr(OH)_2] + [Sr^{++}] = 50 \; (\mu mol/l) \ast c_{SrO}$,

24. $[BaOH^+][OH^-] / [Ba(OH)_2] = 10^{-pkb}$

25. $[Ba^{++}][OH^-] / [BaOH^+] = 10^{-pkb}$,

26. $[BaOH^+] + [Ba(OH)_2] + [Ba^{++}] = 50 \; (\mu mol/l) \ast c_{BaO}$,

27. $[Na^+][OH^-] / [NaOH] = 10^{-pkb}$,

28. $[Na^+] + [NaOH] = 50 \; (\mu mol/l) \ast 2 \ast c_{Na2O}$,

29. $[K^+][OH^-] / [KOH] = 10^{-pkb}$,

30. $[K^+] + [KOH] = 50 \; (\mu mol/l) \ast 2 \ast c_{K2O}$,

31. $[OH^-][H^+] = 10^{-14}$,

32. $2\ast[H_2SiO_4^{--}] + [H_3SiO_4^-] + [Zr(OH)_5^-] + [Al(OH)_4^-] + 2\ast[Zn(OH)_4^{--}] + [Zn(OH)_3^-] + [OH^-] = [Zr(OH)_3^+] + [Al(OH)_2^+] + 2\ast[Zn^{++}] + [ZnOH^+] + 2\ast[Ba^{++}] + [BaOH^+] + 2\ast[Sr^{++}] + [SrOH^+] + 2\ast[Ca^{++}] + [CaOH^+] + 2\ast[Mg^{++}] + [MgOH^+] + [Na^+] + [K^+] + [H^+]$

Die Gleichungen 1 - 31 sind Gleichgewichtsbedingungen, und Gleichung 32 ist die Elektroneutralitätsbedingung.

Das Gleichungssystem ist mit einem der gängigen mathematischen Codes wie z.B. MATHEMATICA von Wolfram Research Inc. eindeutig lösbar. MATHEMATICA liefert eine Liste von Lösungen, von denen jedoch nur eine die notwendige Zusatzbedingung erfüllt, dass alle Konzentrationen positive Werte haben müssen.

Der pH-Wert folgt definitionsgemäß als negativer dekadischer Logarithmus von $[H^+]$. Wir nehmen noch zur Kenntnis, dass bei Raumtemperatur pks + pkb = 14 gilt.

Der Titanoxidanteil des Glases wird bei dieser pH-Wert-Berechnung nicht berücksichtigt, da Titanoxid in neutraler oder schwach basischer wässriger Lösung unlöslich ist.

## Berechnung der Laugenbeständigkeit nach ISO 695

Der Erfindung liegt an dieser Stelle ein überraschenderweise gefundener Zusammenhang zwischen einer mit Hilfe von topologischen Betrachtungen konstruierten Größe und der beim Test nach der ISO 695 gemessenen Abtragrate zugrunde.

Wesen topologischer Betrachtungen ist, wie beispielsweise in DE 10 2014 119 594 A1 ausführlich dargelegt, die den Atomen durch die Bindung zu den Nachbaratomen auferlegten Zwangsbedingungen abzuzählen. Diese Zwangsbedingungen betreffen zum einen Teil den interatomaren Abstand ("Abstandsbedingungen"), zum anderen die Bindungswinkel ("Winkelbedingungen"). Hat ein Atom r Nachbarn (r = Koordinationszahl), so folgen aus den r Abstandsbedingungen zu diesen Nachbarn r/2 diesem Atom zuzuordnende Abstandsbedingungen, wenn man die Abstandsbedingungen gleich unter beiden Bindungspartnern verteilt. Aus den Bindungswinkeln zwischen diesen Nachbarn, mit dem betrachteten Atom an der Spitze des jeweiligen Winkels, folgen weitere 2r-3 Winkelbedingungen, die diesem Atom zuzuordnen sind.

In DE 102014 119 594 A1 ist ein Verfahren beschrieben, das bei der Berechnung der Abstands- und Winkelbedingungen eine Wichtung aller Bedingungen mit der Einzelbindungsstärke und noch einmal eine zusätzliche Wichtung der Winkelbedingungen (nur die von den Sauerstoff-Kation-Sauerstoff-Winkeln herrührenden; die zu den Kation-Sauerstoff-Kation-Winkeln gehörenden Bedingungen werden vernachlässigt) mit dem Kovalenzgrad der jeweiligen Bindung vorsieht. Dabei sind die Wichtungsfaktoren normiert, indem jeweils durch die Einzelbindungsstärke bzw. den Kovalenzgrad der Silicium-Sauerstoffbindung geteilt wird, so dass sich für Quarzglas eine Zahl von (gerundet) 1,333333333 (d.h. 4/3) Abstandsbedingungen und (gerundet) 1,666666667 (d.h. 5/3) Winkelbedingungen pro Atom ergibt. Das entspricht, wie in DE 102014 119 594 A1 dargelegt, der direkten Analyse der Topologie von Quarzglas, wenn man alle Abstands- und Winkelbedingungen einfach zählt und die Winkelbedingungen der Silicium-Sauerstoff-Silicium-Winkel vernachlässigt.

Damit hat Quarzglas eine Zahl von "3" Zwangsbedingungen pro Atom, was genau der Zahl der Freiheitsgrade pro Atom entspricht. Quarzglas sollte also keine (oder realiter: eine sehr geringe) Zahl von Freiheitsgraden pro Atom haben, was dem geringen $c_p$-Sprung von Quarzglas beim differenzkalorimetrisch gemessenen Glasübergang entspricht, siehe R. Brüning, "On the glass transition in vitreous silica by differential thermal analysis measurements", Journal of Non-Crystalline Solids 330 (2003) 13-22.

Für andere oxidische Gläser ergeben sich im Allgemeinen niedrigere Werte für die Zahlen der Abstands- und Winkelbedingungen pro Atom als (gerundet) 1,333333333 (4/3) bzw. 1,666666667 (5/3). Die Differenzen sind entsprechend die Anzahlen der Abstands- bzw. Winkelfreiheitsgrade pro Atom. Bei den Winkelfreiheitsgraden kann man noch unterscheiden, ob die zugehörigen Winkelbedingungen sich auf Winkel beziehen, die alle in einer Ebene liegen (trigonale Koordination) oder nicht (tetraedrische oder höhere Koordination). Letztere werden hier als 3D-Winkel-bedingungen bezeichnet; die Differenz zu (gerundet) 1,666666667 (4/3) entsprechend als 3D-Winkelfreiheitsgrade.

Überraschenderweise findet man einen Zusammenhang zwischen der Zahl der 3D-Winkelfreiheitsgrade pro Atom und der Abtragrate r beim ISO 695 Test, mit dem man die Lage eines Glases bezüglich der Laugenbeständigkeitsklassen einschätzen kann. Dieser speziell für die Anwendbarkeit auch auf hoch alkalihaltige Gläser optimierte und an einer Vielzahl von Gläsern ausgetestete Zusammenhang ist gegeben durch:

$$r = c \cdot \left( \frac{M}{M_{SiO_2}} \cdot \frac{N}{N_{SiO_2}} \right) \cdot \left( (1+f)^6 + c' \right) \cdot (0{,}9483333 - \Lambda) \qquad (2)$$

"c" ist eine Konstante mit Dimension mg/(dm²3h); der numerische Wert lautet 163,9. "f" ist die Zahl der 3D-Winkelfreiheitsgrade pro Atom. "c'" ist eine dimensionslose Konstante mit Wert 1,8. Der Exponent "6" ist empirisch gefunden worden. $\Lambda$ ist die optische Basizität.

Der Faktor $N/N_{SiO_2}$ dient der Umrechnung von einer Atomgruppe, an der die obige Wahrscheinlichkeitsüberlegung gemacht worden ist, auf ein Mol. N ist die Zahl der Atome pro Mol. $N_{SiO_2}$ ist die Zahl der Atome pro Mol Quarzglas (nämlich $3N_A$, $N_A$ Avogadrozahl) und dient der Normierung dieses Ausdruckes. Man kann diesen Faktor ohne großen Fehler gleich einer Konstanten setzen und diese Konstante in den Vorfaktor "c" hineinziehen, wenn man sich nur innerhalb einer eng umschriebenen Glasfamilie bewegt. Der Faktor $M/M_{SiO_2}$ dient der Umrechnung der obigen atomaren Betrachtung auf eine Massenbetrachtung. M ist die Masse eines Mols. $M_{SiO_2}$ ist die Masse eines Mols Quarzglas (nämlich 60,084g) und dient der Normierung dieses Ausdruckes. Man kann auch diesen Faktor ohne großen Fehler gleich einer Konstanten setzen und diese Konstante in den Vorfaktor "c" hineinziehen, wenn man sich nur innerhalb einer eng umschriebenen Glasfamilie bewegt.

Der Zusammenhang zwischen Abtragrate und Zahl der 3D-Winkelfreiheitsgrade ist, wie gesagt, empirisch gefunden worden, erscheint aber im Hinblick darauf, daß die Kinetik des Eindringens von OH⁻-Ionen in das Glas von der Entropie des Glases abhängt, plausibel. Der Faktor (0,9483333-$\Lambda$) wird nicht mit der Kinetik des Prozesses in Verbindung gebracht, sondern mit der Triebkraft der im Rahmen der Auflösung des Glases in der Lauge stattfindenden Säure-Base-Reaktion.

Da die erfindungsgemäßen Gläser eine Kombination der oben angegebenen konstituierenden Phasen aufweisen, ist es für die Berechnung der Zahl der 3D-Winkelfreiheitsgrade pro Atom zweckmäßig, diese zunächst für jede konstituierende Phase numerisch anzugeben. Es gilt:

**Tabelle 6**

| Konstituierende Phase | Stöchiometrie | Molmasse/ g | Zahl der Atome pro Baueinheit | Zahl der 3D-Winkelfreiheitsgrade pro Atom |
|---|---|---|---|---|
| Siliziumdioxid | SiO2 | 60,084 | 3 | 0 |
| Wollastonit | (CaO·SiO2)/2 | 58,0805 | 5/2 | 0,573505131 |
| Cordierit | (2MgO·2Al2O3·5SiO2)/9 | 64,9948 | 29/9 | 0,427525472 |

(fortgesetzt)

| Konstituierende Phase | Stöchiometrie | Molmasse/ g | Zahl der Atome pro Baueinheit | Zahl der 3D-Winkelfreiheitsgrade pro Atom |
|---|---|---|---|---|
| Anorthit | (CaO·Al2O3·2SiO2)/4 | 69,5515 | 13/4 | 0,492665929 |
| Strontium-Feldspat | (SrO·Al2O3·2SiO2)/4 | 81,437 | 13/4 | 0,501247171 |
| Celsian | (BaO·Al2O3·2SiO2)/4 | 93,86375 | 13/4 | 0,508110849 |
| Hardystonit | (2CaO·ZnO·2SiO2)/5 | 62,7402 | 12/5 | 0,70417724 |
| Titanit | (CaO·TiO2·SiO2)/3 | 65,342 | 8/3 | 0,612867814 |
| Gittinsit | (CaO·ZrO2·2SiO2)/4 | 74,86675 | 11/4 | 0,459754564 |

Die Zahlenwerte sind nach dem in DE 10 2014 119 594 A1 angegebenen Verfahren berechnet worden, wobei hier die Zahl der Winkelfreiheitsgrade für alle Kationen berechnet worden ist und zwar so wie in DE 10 2014 119 594 A1 (aber dort nur für Bor und Aluminium); außerdem ist der Ionisationsgrad einer Kation-Sauerstoff-Verbindung nicht nach der Formel (8) aus der DE 10 2014 119 594 A1, sondern nach der Formel (3) aus Alberto Garcia, Marvon Cohen, First Principles Ionicity Scales, Phys. Rev. B 1993 berechnet worden. Dazu benötigt man noch eine Information über die Koordinationszahl des jeweiligen Kations, für die man nach Conradt, loc.cit., die Koordinationszahl in der jeweiligen konstituierenden Phase heranzieht (wenn ein Kation in mehreren Koordinationszahlen vorkommt, wird entsprechend den Anteilen in den verschiedenen Koordinationszahlen gemittelt). Die genannten Koordinationszahlen entnimmt man der Literatur, für SiO2 wird die 4-fache Kordination von Silizium als allgemein bekannt angenommen; für Wollastonit: Mineralogical Society of America, Special Paper 1, pages 293 - 302, 1963, im Hinblick auf welche Quelle Silizium als 4-fach und Kalzium als 6-fach koordiniert angenommen werden; für Cordierit: American Mineralogist, Volume 77, pages 407-411, 1992, im Hinblick auf welche Quelle Silizium und Aluminium als 4-fach und Magnesium als 6-fach koordiniert angenommen werden; für Anorthit: American Mineralogist 58 (1973), 495-499, im Hinblick auf welche Quelle Silizium und Aluminium als 4-fach und Kalzium als 7-fach koordiniert angenommen werden; für Strontium-Feldspat: American Mineralogist, Volume 60, pages 111-119, 1975, American Mineralogist 59, 1319 - 1326, 1974, im Hinblick auf welche Quellen Silizium und Aluminium als 4-fach und Strontium als 9-fach koordiniert angenommen werden; für Celsian: es werden die Daten der Hochtemperaturphase Hexacelsian verwendet, siehe Mineralogical Journal 2, 5, pages 311 - 332, 1958, im Hinblick auf welche Quelle Silizium und Aluminium als 4-fach und Barium als 12-fach koordiniert angenommen werden; für Hardystonit: Zeitschrift für Kristallographie, Bd. 130, S. 427-437 (1969), im Hinblick auf welche Quelle Silizium und Aluminium als 4-fach und Kalzium als 8-fach koordiniert angenommen werden; für Titanit: American Mineralogist, Volume 61, pages 238-247, 1976, im Hinblick auf welche Quelle Silizium als 4-fach, Titan als 6-fach und Kalzium als 7-fach koordiniert angenommen werden; für Gittinsit: Canadian Mineralogist Vol. 27, pp. 703-708 (1989), im Hinblick auf welche Quelle Silizium als 4-fach, Zirkonium als 6-fach und Kalzium ebenfalls als 6-fach koordiniert angenommen werden.

Die Rechenvorschrift zur Bestimmung der 3D-Winkelfreiheitsgrade f pro Atom am fertigen Glas lautet damit:

$$f = \frac{\sum_{i=1}^{n} c_i \cdot z_i \cdot f_i}{\sum_{i=1}^{n} c_i \cdot z_i} \ , \qquad (3)$$

wobei $c_i$ der molare Anteil der i-ten konstituierenden Phase in der betrachteten Glaszusammensetzung ist, $z_i$ die Zahl der Atome pro Baueinheit in der i-ten konstituierenden Phase (oder Zahl der Atome pro Mol in der i-ten konstituierenden Phase; dann in Einheiten von $N_A$, $N_A$ Avogadrozahl) und $f_i$ die Zahl der Winkelfreiheitsgrade pro Atom in der i-ten konstituierenden Phase. "n" ist die Zahl der konstituierenden Phasen.

Die Rechenvorschrift zur Bestimmung von $M/M_{SiO2}$ lautet:

$$\frac{M}{M_{SiO_2}} = \frac{\sum_{i=1}^{n} c_i \cdot M_i}{M_{SiO_2} \cdot \sum_{i=1}^{n} c_i} \ , \qquad (4)$$

wobei $c_i$ der molare Anteil der i-ten konstituierenden Phase in der betrachteten Glaszusammensetzung ist und $M_i$ die entsprechende Molmasse, "n" ist die Zahl der konstituierenden Phasen.

Die Rechenvorschrift zur Bestimmung von N/N$_{SiO2}$ lautet:

$$\frac{N}{N_{SiO_2}} = \frac{\sum_{i=1}^{n} c_i \cdot z_i}{3 \cdot \sum_{i=1}^{n} c_i} \, , \qquad\qquad (5)$$

wobei $c_i$ der molare Anteil der i-ten konstituierenden Phase in der betrachteten Glaszusammensetzung ist und $z_i$ die Zahl der Atome pro Baueinheit in der i-ten konstituierenden Phase (oder Zahl der Atome pro Mol in der i-ten konstituierenden Phase; dann in Einheiten von $N_A$, $N_A$ Avogadrozahl), "n" ist die Zahl der konstituierenden Phasen.

Der Faktor (0,9483333-$\Lambda$) wird durch folgende Überlegung mit der Triebkraft der Auflösung in Verbindung gebracht. Diese Triebkraft ist umso höher, je "saurer" das Glas ist, d.h. je höher der Anteil von Säureanhydriden und je geringer der Anteil von Baseanhydriden ist. Ein quantitatives Maß hierfür ist die optische Basizität, siehe C.P. Rodriguez, J.S. McCloy, M.J. Schweiger, J.V. Crum, A, Winschell, Optical Basicity and Nepheline Crystallization in High Alumina Glasses, Pacific Northwest National Laboratories, PNNL 20184, EMSP-RPT 003, prepared for the US Department of Energy under contract DE-AC05-76RL01830. Je niedriger die optische Basizität ist, desto höher ist die Triebkraft. Der Fall "Triebkraft gleich Null" liegt vor, wenn es sich um ein Material handelt, in dem die Säure-Base-Reaktion vollständig durchgelaufen ist. Den letztgenannten Fall nehmen wir insbesondere an, wenn das Glas die Stöchiometrie von Natriummetasilikat hat, also unter allen als Feststoff vorkommenden Natriumsilikaten demjenigen, das den höchsten Natriumanteil hat. (Natriumorthosilikat kommt nur in wäßriger Lösung vor.) Dessen optische Basizität ist nach der im folgenden beschriebenen Methode zur Berechnung derselben gerade 0,9483333, also der Wert, bei dem per constructionem der o.a. Faktor (0,9483333-$\Lambda$) gleich Null wird.

Wir berechnen die optische Basizität $\Lambda$ nach Formel B.1 mit den Koeffizienten $\Lambda_{\chi av}$ (optische Basizität nach Li und Xue) gemäß Abschnitt B.1.6 und Tabelle B.1 aus C.P. Rodriguez, J.S. McCloy, M.J. Schweiger, J.V. Crum, A, Winschell, Optical Basicity and Nepheline Crystallization in High Alumina Glasses, Pacific Northwest National Laboratories, PNNL 20184, EMSP-RPT 003, prepared for the US Department of Energy under contract DE-AC05-76RL01830. Wenn in der Tabelle für polyvalente Ionen mehrere einfache Oxide angegeben werden, wird zunächst dasjenige ausgewählt, das stöchiometrisch passt. Im vorliegenden Fall wird bei Titan deshalb $TiO_2$ ausgewählt. Wo in der Tabelle für das so ausgewählte einfache Oxid nur ein Koeffizient angegeben wird, wird dieser verwendet. Wo in der Tabelle für das ausgewählte einfache Oxid mehrere Koeffizienten angegeben werden, wird derjenige verwendet, der zu den Koordinationszahlen des jeweiligen Kations in den konstituierenden Phasen passt. Für das oben beschriebene Grundsystem ist das nur bei Aluminiumoxid und Magnesiumoxid notwendig. Da Aluminium in allen konstituierenden Phasen des Grundsystems 4-fach koordiniert vorliegt und wir das entsprechend Conradt, loc. cit., auch annehmen, wird der in Tabelle B.1 bei Aluminiumoxid für die Koordinationszahl 4 angegebene Wert für den Koeffizienten $\Lambda_{ICP}$ verwendet. Da Magnesium in der einzigen Magnesium enthaltenden konstituierenden Phase des Grundsystems 6-fach koordiniert vorliegt, wird der in Tabelle B.1 bei Magnesiumoxid für die Koordinationszahl 6 angegebene Wert für den Koeffizienten $\Lambda_{\chi av}$ verwendet.

**Säurebeständigkeit**

Überraschenderweise lässt sich auch die Abtragrate in Säure mit Hilfe einer einfach zu berechnenden Beziehung abschätzen.

Ausgangspunkt der dahinterstehenden Überlegungen ist zunächst die Theorie von Anderson und Stuart über die Ionenbeweglichkeit in silicatischen Gläsern, siehe O.L. Anderson, D.A. Stuart, Calculation of Activation Energy of Ionic Conductivity in Silica Glasses by Classical Methods, Journal of the American Ceramic Society, Vol. 37, No. 12 (1954), 573 - 580. Danach hängt die Aktivierungsenergie der Bewegung eines Kations in einem silicatischen und damit oxidischen Glas zum einen von der zu überwindenden elektrostatischen Wechselwirkung mit den umgebenden Sauerstoffionen und zum anderen von dem zu überwindenden mechanischen Widerstand beim Wechsel von einer Masche des silicatischen Netzwerks in die nächste ab. Der erstgenannte Beitrag ist nach dem Coulombschen Gesetz proportional zur Ladungszahl des betrachteten Kations und umgekehrt proportional zur Dielektrizitätskonstanten, der zweitgenannte Beitrag ist proportional zum Schermodul und zum Quadrat des Maßes, um das der Durchmesser des betrachteten Kations die Maschenweite des Netzwerkes überschreitet. Wegen des erstgenannten Beitrages sind i.a. nur einfach geladene Kationen beweglich und mehrfach geladene Kationen wie Aluminium ortsfest.

Im Kontakt zu einer hochkonzentrierten Säure, nach ISO 1776 bzw. DIN 12116 ist das 6N Salzsäure, ist das anders. In diesem Fall diffundieren Protonen bzw. Hydroniumionen in das Glas ein und bilden an der Oberfläche mit den im Säurebad zurückgebliebenen Choridionen eine elektrische Doppelschicht. Bei der Analyse des Eluates von nach ISO 1776 vorgenommenen Messungen hat sich gezeigt, daß diese elektrische Doppelschicht sich so weit ausbildet, daß das daher rührende elektrische Feld in der Lage ist, die elektrostatische Wechselwirkung des jeweiligen Kations mit den umgebenden Sauerstoffionen zu kompensieren, so daß auch Ionen hoher Ladungszahl beweglich werden. (Die Kraftwirkung des elektrischen Feldes der genannten Doppelschicht hängt genauso wie die elektrostatische Wechselwirkung des betrachteten Kations von dessen Ladungszahl ab; erstere kann von daher in der Lage sein, letztere zu kompensieren.) Dabei ist zu berücksichtigen, dass das im Hydroniumion $H_3O^+$ enthaltene $H_2O$ wegen der sehr großen dielektrischen Permeabilität von Wasser die elektrostatische Wechselwirkung zusätzlich schwächt. Genauso schwächt das Aufquellen des Netzwerks den mechanischen Zusammenhalt.

Man beobachtet, dass unter gleichen Versuchsbedingungen (denen der ISO 1776 bzw. der DIN 12116) erheblich mehr Aluminiumionen ein alkalifreies Displayglas verlassen als Natriumionen ein Kalk-Natron-Glas. Das spricht dafür, dass die entscheidende Eigenschaft für die Beweglichkeit eines Ions dessen Radius ist, der wiederum für ein $Al^{+++}$-Ion viel kleiner ist als für ein $Na^+$-Ion. Es ist also sinnvoller, die Bewegung von Ionen im Glas und aus dem Glas hinaus mit der Theorie der Bewegung von Teilchen in einer viskosen Flüssigkeit anstatt mit der Theorie von Anderson und Stuart zu beschreiben. Nach Stokes-Einstein ist der Diffusionskoeffizient für eine Kugel in einer viskosen Flüssigkeit umgekehrt proportional zur Viskosität und zum Radius der Kugel.

Für eine einfache Beschreibung des Säureangriffs machen wir den folgenden Modellansatz. Wir betrachten die obersten Atomlagen des Glases:

In einem ersten Schritt diffundiert eine bestimmte Anzahl der Kationen dieser Atomlagen hinaus in die Säure. Diese Anzahl ist proportional zum jeweiligen Diffusionskoeffizienten, der wiederum gegeben ist durch:

$$D_{i,j} = \frac{const.}{r_{i,j}} \qquad (6)$$

Dabei ist $r_{i,j}$ der Radius des Kations vom Typ "j" in der i-ten konstituierenden Phase. Damit ergibt sich für die Verlustzahl $\Omega_{i,j}$ an Kationen vom Typ "j" aus der i-ten konstituierenden Phase:

$$\Omega_{i,j} = z_{i,j} \cdot D_{i,j} \qquad (7)$$

Dabei ist $z_{j,i}$ die Anzahl der Kationen des j-ten Typs in der i-ten konstituierenden Phase.

Die in der Stokes-Einstein-Gleichung auftretende Viskosität ist dabei in die Konstante integriert worden; wir gehen also davon aus, dass die sich für das aufgeweichte, "gelartige" Glas ergebende Viskosität unter den Versuchsbedingungen für alle konstituierenden Phasen gleich ist. Wir gehen weiter davon aus, dass sich der in diesem ersten Schritt erfolgende Verlust an Kationen in der Verlustbilanz als ein entsprechender Verlust an Oxiden niederschlägt, dass sich also als Resultat dieses ersten Schrittes für ein Mol Glas ein Masseverlust $\Delta M_1$ der folgenden Größe ergibt:

$$\Delta M_1 = \frac{\sum_{i,j} c_i \cdot \Omega_{i,j} \cdot \frac{M_j}{\gamma_j}}{\sum_i c_i} = \frac{\sum_{i,j} c_i \cdot z_{i,j} \cdot \frac{const.}{r_{i,j}} \cdot \frac{Me_j}{a_j}}{\sum_i c_i} =: const. \cdot \frac{\sum_{i,j} c_i \cdot \frac{z_{i,j}}{r_{i,j}} \cdot \frac{Me_j}{a_j}}{\sum_i c_i} \qquad (8)$$

$Me_j$ ist die Molmasse des zum Kation vom Typ "j" gehörenden einfachen Oxids und $a_j$ ist die Anzahl der Kationen vom Typ "j" in diesem Oxid. Die Konstante "const." wird empirisch ermittelt, so dass das Modell für den erfindungsgemäßen Glaszusammensetzungsbereich optimale Ergebnisse liefert. Der numerische Werte beträgt:

$$const. = 0{,}73\text{Å} \qquad (9)$$

$\Delta M_1$ ergibt sich damit in der Einheit g/mol. $r_{i,j}$ ist in Å einzusetzen.

In einem zweiten, gedanklich vom ersten getrennten Schritt wird die Ladungsbilanz in den obersten Atomlagen des Glases wieder ausgeglichen, indem - das ist unsere Modellannahme - so viele Hydronium-Ionen eindringen, wie zur Ladungskompensation nötig sind. Diese Zahl $Z_2$ ist für ein Mol Glas gegeben durch:

$$Z_2 = \sum_{i,j} c_i \cdot \Omega_{i,j} \cdot w_j \qquad (10)$$

$w_j$ ist die Wertigkeit eines Kations vom j-ten Typ. An den Ort eines jeden hinausdiffundierten Kations setzen sich genauso viele aus den hereindiffundierten Hydronium-Ionen stammende $H^+$-Ionen, wie der Wertigkeit des hinausdiffundierten Kations entspricht.

Nun ist in jedem Hydronium-Ion auch ein $H_2O$ enthalten, das wiederum in der Lage ist, im Glas eine Sauerstoffverbindung zu lösen und durch zwei Hydroxylgruppen zu ersetzen. Wenn wir $Z_2$ ins Verhältnis zur Gesamtzahl der Sauerstoffatome im Glas setzen, erhalten wir eine Abschätzung desjenigen Anteils des Glases, der durch dieses Lösen von Sauerstoffverbindungen aufgelöst wird. Dabei machen wir keinen Unterschied, welche Kationen auf den beiden Seiten der Sauerstoffverbindungen sitzen.

Die Gesamtzahl der Sauerstoffatome O in einem Mol Glas ist:

$$O = \sum_i c_i \cdot O_i \qquad (11)$$

Dabei ist $O_i$ die Zahl der Sauerstoffatome in der i-ten konstituierenden Phase.

Wir schätzen den sich daraus ergebenden Masseverlust $\Delta M_2$ ab durch:

$$\Delta M_2 = M \cdot \frac{Z_2}{O} \qquad (12)$$

Der aufsummierte Masseverlust aus den Schritten 1 und 2 berechnet sich zu

$$\Delta M = \Delta M_1 + \Delta M_2 \qquad (13)$$

Durch den Austausch der hinausdiffundierten Kationen gegen die die jeweils äquivalente Anzahl von $H^+$-Ionen wird die oberste Glasschicht weiter aufgeweicht und in ein Gel umgewandelt. Hauptsächliches Kation dieses Gels ist Silizium, da Silizium, wie unten dargelegt wird, die geringste Neigung hat, hinauszudiffundieren.

Wenn es in jedem Fall dabei bliebe, würde das entstandene Gel die Diffusion aus dem Glas hinaus und in das Glas herein erschweren, so dass sich mit fortschreitender Auflösung eine immer geringere Auflösungsrate ergäbe. Das entspricht auch in der Tat dem Befund, den man bei Langzeitmessungen an säurefestem Glas wie Borofloat33™ von Schott hat.

Durch die zusätzliche Wirkung des $H_2O$ werden allerdings Teile dieses Gels vollständig aufgelöst. Bei säurefestem Glas ist dieser Effekt gering, so dass der Befund so ist wie gerade beschrieben, nämlich dass sich eine langsame Auflösung des Glases mit zeitlich abnehmender Auflösungsrate ergibt.

Was sich bei weniger säurefestem Glas ergibt, kann man sich in einem Gedankenexperiment verdeutlichen. Es möge von der obersten Glasschicht ein so großer Anteil vollständig verschwinden, wie es der Zahl der ursprünglich im Glas vorhandenen Sauerstoffatome, die im Zuge der Schritte 1 und 2 durch jeweils zwei OH-Gruppen ersetzt werden, entspricht. Jedes Hydronium-Ion führt zu so viel OH-Gruppen, wie es H-Atome beinhaltet, also zu drei OH-Gruppen. Damit werden anderthalb mal so viele Sauerstoffatome ersetzt wie Hydronium-Ionen in das Glas hereindiffundieren.

Der Anteil $\varepsilon$ der obersten Glasschicht, der vollständig verschwindet und somit die nächstuntere Glasschicht freilegt, ist gegeben durch:

$$\varepsilon = \frac{3}{2} \cdot \frac{Z_2}{O} \qquad (14)$$

Wir machen jetzt den weiteren Modellansatz, daß der diffusive Austausch einer frei liegenden, sich im direkten Kontakt mit der Säure befindenden Glasschicht rasch erfolgt, während der durch eine Gelschicht gebremste diffusive Austausch langsam erfolgt.

Damit müssen wir zu dem o.a. Masseverlust $\Delta M$ aus Gleichung (12) noch den Masseverlust $\varepsilon \cdot \Delta M$, der an der freigelegten nächstunteren Glasschicht entsteht, hinzuzählen. Da auch diese nächstuntere Glasschicht zu einem Teil $\varepsilon$ vollständig verschwindet, setzt sich das Ganze nach Art einer geometrischen Reihe fort. Wir erhalten für den gesamten Masseverlust $\Delta M_{ges}$:

$$\Delta M_{ges} = \Delta M + \Delta M \cdot \varepsilon + \Delta M \cdot \varepsilon^2 + \Delta M \cdot \varepsilon^3 + \cdots = \frac{\Delta M}{1-\varepsilon} \qquad (15)$$

Der Nenner legt nahe, dass es bei $\varepsilon \geq 1$ zu einem katastrophalen Auflösungsverhalten kommt. Das wird auch experimentell bestätigt.

Die Einheit von $\Delta M_{ges}$ ist, da überall mit "Mol" und "Molmasse" (in Gramm) gerechnet worden ist, "Gramm pro Mol". Mit Hilfe eines Vorfaktors f, in den auch die Zeit eingeht, in der $\Delta M_{ges}$ abgetragen wird, wird unten noch auf "Milligramm pro Dezimeterquadrat und sechs Stunden" (mg/(dm$^2$6h) umgerechnet, um die Größe mit der Messgröße der DIN 12116 vergleichbar zu machen.

Die damit mögliche Berechnung des Abtrages bei einem Säurebeständigkeitstest gemäß DIN 12116 erfolgt mit Hilfe der folgenden Tabelle.

**Tabelle 7**

| Konstituierende Phase | Stöchiometrie | *const.* $\cdot \sum_j \frac{z_{i,j}}{r_{i,j}} \cdot \frac{Me_j}{a_j}$ | *const.* $\cdot \sum_j \frac{z_{i,j}}{r_{i,j}} \cdot w_i$ | $O_i$ |
|---|---|---|---|---|
| Siliziumdioxid | SiO2 | 0 | 0 | 2 |
| Wollastonit | (CaO·SiO2)/2 | 17,95524 | 0,64035 | 1,5 |
| Cordierit | (2MgO·2Al2O3·5SiO2)/9 | 38,81091 | 2,21373 | 2 |
| Anorthit | (CaO·Al2O3·2SiO2)/4 | 43,23192 | 2,35572 | 2 |
| Strontium-Feldspat | (SrO·Al2O3·2SiO2)/4 | 48,15106 | 2,31776 | 2 |
| Celsian | (BaO·Al2O3·2SiO2)/4 | 51,09937 | 2,27460 | 2 |
| Hardystonit | (2CaO·ZnO·2SiO2)/5 | 29,05211 | 0,85808 | 1,4 |
| Titanit | (CaO·TiO2·SiO2)/3 | 24,96047 | 1,08616 | 1,66666 |
| Gittinsit | (CaO·ZrO2·2SiO2)/4 | 24,85611 | 0,83563 | 1,75 |

Die Größe $\Delta M_1$ wird durch Multiplikation der Zahlen in der dritten Spalte mit den $c_i$ und anschließende Aufsummation bestimmt. Die Größe $Z_2$ wird durch Multiplikation der Zahlen in der vierten Spalte mit den $c_i$ und anschließende Aufsummation bestimmt. Die Größe O wird durch Multiplikation der Zahlen in der fünften Spalte mit den $c_i$ und anschließende Aufsummation bestimmt. Die Größe M wird wie oben berechnet.

Zur Berechnung der in der Tabelle gelisteten Größen ist noch folgendes zu sagen. Die Größen $z_{i,j}$ und $O_j$ ergeben sich unmittelbar aus der Stöchiometrie. Die Molmassen der einfachen Oxide sind allgemein bekannt, desgleichen die Wertigkeiten der Kationen. Für die Ionenradien ri,j werden die Werte von R.D. Shannon, Revised Effective Ionic Radii and Systematic Studies of Interatomic Distances in Halides and Chalcogenides, Acta Cryst. A32 (1976), 751-767, herangezogen. Dabei beziehen wir uns wegen im Zusammenhang mit der Ionenleitfähigkeit gemachten guten Erfahrungen, siehe DE102015005836, nicht auf die mit "IR", sondern auf die mit "CR" gekennzeichneten Spalten. Es wird immer der Ionenradius gewählt, der zu der in der konstituierenden Phase vorliegenden Koordination gehört. Die jeweilige Koordinationszahl wird der o.a. Literatur zu den konstituierenden Phasen entnommen.

Anders gehandhabt werden nur die Ionen von Silizium, Titan und Zirkonium, die auch in stark sauren Lösungen nicht als einfache Ionen vorliegen. Zirkonium liegt in stark saurer wäßriger Lösung überwiegend als ZrOH$^{3+}$ vor, siehe J.H. Adair, H. Krarup, S. Venigalla, and T. Tsukada, "A Review of the Aqueous Chemistry of the Zirconium-Water System to 200°C," invited paper in Aqueous Chemistry and Geochemistry of Oxides, Oxyhydroxides, and Related Materials, J.A. Voight, B.C. Bunker, W.H. Casey, T.E. Wood, and L.J. Crossey (eds.). MRS Volume 432, Materials Research Society, Pittsburgh, PA, 1997, pp. 101-112. Mit dem Ionenradius von Zirkonium in Gittinsit, nämlich 0,86Å, siehe Shannon, loc. cit., und dem einer OH-Gruppe in zweifacher (der niedrigsten bei Shannon angegebenen) Koordination, nämlich 1,18Å, siehe Shannon, loc. cit., ergibt sich eine Baueinheit, die in einer Dimension den Halbmesser 2,04Å und in den beiden anderen Dimensionen jeweils den Halbmesser 1,18Å hat (wir wählen für den Halbmesser in den beiden anderen Dimensionen den größeren Wert von 0,86Å und 1,18Å). Wir berechnen daraus einen mittleren Radius von $(2,04Å \cdot 1,18Å \cdot 1,18Å)^{(1/3)} = 1,416Å$.

Vierwertiges Titan liegt in stark saurer wässriger Lösung vorzugsweise als Titanyl TiO$^{2+}$ vor, siehe D. Lundberg, I. Persson, Structure of a Hydrated Sulfonatotitanyl(IV) Complex in Aqueous Solution and the Dimethylsulfoxide Solvated Titanyl(IV) Ion in Solution and Solid State, Journal of Solution Chemistry 46, 2 (2017), 476-487. Mit dem Ionenradius von Titan in Titanit, nämlich 0,745Å, siehe Shannon, loc. cit., und dem eines von Ladung und Koordination dazu passenden Sauerstoffatoms, nämlich 1,22Å, siehe Shannon, loc. cit., ergibt sich eine Baueinheit, die in einer Dimension den Halbmesser 1,965Å und in den beiden anderen Dimensionen jeweils den Halbmesser 1,22Å hat (wir wählen für den Halbmesser in den beiden anderen Dimensionen den größeren Wert von 0,745Å und 1,22Å). Wir berechnen daraus einen mittleren Radius von $(1,965Å \cdot 1,22Å \cdot 1,22Å)^{(1/3)} = 1,43Å$.

Silizium liegt in saurer wässriger Lösung als Orthokieselsäure vor, nicht als Ion, siehe S. Sjöberg, Silica in aqueous environments, Journal of Non-Crystalline Solids 196 (1996) 51-57. Im Hinblick sowohl darauf als auch auf die Tatsache, dass die Abtragrate für reines Kieselglas bei Tests nach der DIN 12116 unter der laborüblichen Nachweisgrenze liegt, setzen wir den Beitrag von Silizium zum o.a. Schritt 1 gleich Null bzw. nehmen für das Siliziumion einen unendlich großen Radius an.

Aus den mit Hilfe der Tabelle 7 bestimmten Größen $\Delta M_1$, $Z_2$, O und M wird $\Delta M_{ges}$ in g/mol berechnet. Mit Hilfe des Vorfaktors f wird auf mg/(dm²6h) umgerechnet. Dieser Vorfaktor wird für alle Glaszusammensetzungen des erfindungsgemäßen Bereiches gleich gewählt, da sich die erfindungsgemäßen Gläser bezüglich der Dichte so weit ähneln, daß eine genaue Aufschlüsselung keinen signifikanten Genauigkeitszuwachs brächte. Der zu einer bestmöglichen Übereinstimmung gemessener und gerechneter Werte für die Abtragrate nach DIN 12116 führende numerische Wert von f ist:

$$f = 0,0096 \cdot \frac{mg}{dm^2 6h} \cdot \frac{mol}{g} \qquad (16)$$

**Thermischer Ausdehnungskoeffizient**

Überraschenderweise lässt sich auch die Lage des thermischen Ausdehnungskoeffizienten im angestrebten Bereich mit Hilfe einer sehr einfachen Rechenvorschrift darstellen. Diese ergibt sich über die mittlere Bindungsstärke.

Aus der Literatur ist bekannt, dass der thermische Ausdehnungskoeffizient z.B. für Metalle umgekehrt proportional zur Bindungsenergie (oder zur "Tiefe der interatomaren Potentialtöpfe") ist, siehe z.B. H. Föll, Skript zur Vorlesung "Einführung in die Materialwissenschaft I", Christian Albrechts-Universität Kiel, S. 79 - 83.

In einem einfachen Bild oxidischer Gläser setzt man die Kationen in jeweils einen von den umgebenden Sauerstoffatomen gebildeten Potentialtopf und nimmt als dessen Tiefe die Summe der Bindungsstärken der verschiedenen Einfachbindungen zu den umgebenden Sauerstoffatomen an, konzentriert also die gesamte Wechselwirkungsenergie in Potentialtöpfe mit den Kationen im Zentrum und den Sauerstoffatomen in der Peripherie. Damit muss der umgekehrte Fall nicht mehr betrachtet werden; er wäre auch schwerer zu analysieren, da sich ein Sauerstoffatom zwischen mehreren verschiedenartigen Kationen befinden kann, was umgekehrt in rein oxidischen Gläsern nicht vorkommen kann. Diese Werte sind tabelliert, z.B. in DE 10 2014 119 594 A1:

**Tabelle 8**

| Kation | Potentialtopftiefe / (kJ/mol) |
|--------|-------------------------------|
| Si | 1864 |
| Ti | 1913 |
| Zr | 2204 |
| Al | 1537 |
| Zn | 728 |
| Mg | 999 |
| Ca | 1063 |
| Sr | 1005 |
| Ba | 976 |

Die Werte für Ti, Zr, Sr, Ba und Zn stammen nicht aus DE 102014 119 594 A1, sind aber nach genau derselben, dort beschriebenen Methode mit den dort zitierten Quellen berechnet worden.

Aus der Zusammensetzung eines Glases aus den oben angegebenen konstituierenden Phasen, den in den jeweiligen Phasen enthaltenen Anzahlen verschiedener Kationen und der oben tabellierten Potentialtopftiefen pro Kation lässt sich eine mittlere Potentialtopftiefe errechnen:

$$\overline{E_{pot}} = \frac{\sum_{i=1}^{n} c_i \cdot \sum_{j=1}^{m} z_{i,j} \cdot E_{pot,j}}{\sum_{i=1}^{n} c_i \cdot \sum_{j=1}^{m} z_{i,j}}, \qquad (17)$$

Dabei ist m die Zahl der auftretenden Kationentypen, $E_{pot,j}$ die oben tabellierte Potentialtopftiefe für den j-ten Kationentyp und $z_{j,i}$ die Anzahl der Kationen des j-ten Typs in der i-ten konstituierenden Phase. Die Summen über j sind im Folgenden tabelliert:

**Tabelle 9**

| konstituierende Phase | Formel (auf ein einfaches Oxid normiert) | $\sum_{j=1}^{m} z_{i,j}$ | $\sum_{j=1}^{m} z_{i,j} \cdot E_{pot,j}$ / (kJ/mol) |
|---|---|---|---|
| Siliziumdioxid | SiO2 | 1 | 1864 |
| Wollastonit | (CaO·SiO2)/2 | 1 | 1463,5 |
| Cordierit | (2MgO·2Al2O3·5SiO2)/9 | 1,222222222 | 1940,666667 |
| Anorthit | (CaO·Al2O3·2SiO2)/4 | 1,25 | 1573 |
| Strontium-Feldspat | (SrO·Al2O3·2SiO2)/4 | 1,25 | 1951,75 |
| Celsian | (BaO·Al2O3·2SiO2)/4 | 1,25 | 1944,5 |
| Hardystonit | (2CaO·ZnO2·2SiO2)/5 | 1 | 1316,4 |
| Titanit | (CaO·TiO2·SiO2)/3 | 1 | 1613,333333 |
| Gittinsit | (CaO·ZrO2·2SiO2)/4 | 1 | 1748,5 |

Diese mittlere Bindungsstärke hängt, wie z.B. auch bei Metallen, siehe H. Föll, loc. cit., umgekehrt proportional mit dem thermischen Ausdehnungskoeffizienten zusammen. Die Auswertung einer Reihe erfindungstypischer Gläser führt zu folgender Formel:

$$CTE = \left( \frac{50067,4649 \left( \frac{kJ}{Mol} \right)}{\overline{E_{pot}}} - 26,1377966 \right) ppm/K \qquad (18)$$

Da die Bindungsstärke umgekehrt proportional zum Schmelzpunkt ist, gilt eine umgekehrte Proportionalität auch zwischen Schmelzpunkt und Ausdehnungskoeffizient, siehe wiederum H. Föll, loc. cit. Da der Schmelzpunkt bei nicht-stöchiometrischen Gläsern nicht genau definiert ist, gilt zwischen der im Allgemeinen als Schmelzpunkt bezeichneten Temperatur, bei der die Viskosität 100 dPas beträgt, und dem Ausdehnungskoeffizienten nur ein tendenzieller Zusammenhang. Über diesen ist aber sichergestellt, dass die erfindungsgemäßen Gläser schmelzbar sind.

Während die Forderung nach einer guten Schmelzbarkeit einen möglichst großen thermischen Ausdehnungskoeffizienten nahelegt, legt umgekehrt die Forderung nach möglichst geringen thermischen Spannungen bei einer eventuellen thermischen Nachprozessierung einen möglichst geringen thermischen Ausdehnungskoeffizienten nahe. Die Kombination beider Forderungen führt auf den hier bevorzugten mittleren Bereich für den Ausdehnungskoeffizienten bzw. die mittlere Potentialtopftiefe.

**Auswahl geeigneter konstituierender Phasen**

Siliziumdioxid

Im Hinblick auf die gewünschte chemische Beständigkeit ist Kieselglas ideal. Eine besonders bevorzugte konstituierende Phase ist daher reines Siliziumdioxid. Nachteilig sind der geringe thermische Ausdehnungskoeffizient und die hohe Schmelztemperatur, so dass weitere konstituierende Phasen beigemischt werden müssen.

Der Anteil an Siliziumdioxid in dem erfindungsgemäßen Glas ist wenigstens 20 Mol% und höchstens 80 Mol%. Bevorzugte Anteile in dem erfindungsgemäßen Glas sind mindestens 25 Mol%, mindestens 30 Mol%, mindestens 35 Mol% oder besonders bevorzugt mindestens 40 Mol%. Vorzugsweise beträgt der Gehalt an Siliziumdioxid höchstens 75 Mol%, weiter bevorzugt höchstens 70 Mol%, weiter bevorzugt höchstens 65 Mol%, weiter bevorzugt höchstens 60 Mol%.

Anorthit

Im Hinblick auf die chemische Beständigkeit ist es wünschenswert, dass besagte weitere konstituierende Phasen das tetraedrische, dreidimensional vernetzte Netzwerk fortsetzen. Hierfür bieten sich Aluminosilicate an, in denen das Aluminium in tetraedrischer Koordination vorliegt. Dieses geschieht i.a. auf Kosten von ebenfalls vorhandenen, als Oxide eingeführte Alkali- oder Erdalkali-Atomen, die ihren Sauerstoff an das Aluminium abgeben und dann als einzelnes Ion im tetraedrischen Netzwerk einen geeigneten Platz besetzen. Borosilicate wären unter diesem Aspekt auch sinnvoll, scheiden aber aus den oben dargelegten Gründen aus. Da diese Gründe auch Alkali-Ionen ausschließen, bleiben nur die Erdalkali-Aluminosilicate übrig. Gebräuchlichstes Erdalkali-Atom in Glas ist Kalzium, so dass sich von daher als erstes Aluminosilicat Anorthit anbietet.

Anorthit gehört zu den typischen glasbildenden Systemen, das aus einem Netzwerkbildner (Siliziumoxid), einem Zwischenoxid (Aluminiumoxid) und einem Netzwerkwandler (Kalziumoxid) zusammengesetzt ist. Bezüglich Verarbeitungstemperatur und thermischer Ausdehnung hat es ideale Eigenschaften. Die Verarbeitungstemperatur liegt bei ca. 1100°C, siehe R. Knoche, D.B. Dingwell, and S.L. Webb, Temperature-dependent thermal expansivities of silicate melts: The system anorthite-diopside, Geochimica et Cosmochimica Acta 56 (1992), 689-699, und der thermische Ausdehnungskoeffizient bei ca. 5 ppm/K, siehe J. Arndt, F. Häberle, Thermal expansion and glass transition temperatures of synthetic glasses of plagioclase-like compositions, Contributions to Mineralogy and Petrology 39, 2 (1973), 175-183.

Problematisch ist die chemische Beständigkeit, insbesondere die Säurebeständigkeit wegen des hohen Aluminiumanteils. Dies ließe sich durch eine Mischung mit Siliziumoxid beheben, was aber den Ausdehnungskoeffizienten in unerwünschter Weise verändert kann. Aus diesem Grunde müssen andere, aluminiumfreie konstituierende Phasen beigemischt werden. Um am Ende alle Eigenschaften wie gewünscht einstellen zu können, ist es außerdem sinnvoll, nicht nur Anorthit, sondern alle Erdalkali-Aluminosilicate zuzulassen.

Unter einem Mol Anorthit wird erfindungsgemäß ein Mol $(CaO \cdot Al_2O_3 \cdot 2SiO_2)/4$ verstanden.

Alle Komponenten nehmen als Hydroxide einen Einfluss auf den pH-Wert bei der Messung der hydrolytischen Beständigkeit. Aluminium- und Kalziumhydroxid sind zwar in neutraler wässriger Lösung und schwachen Laugen schwer löslich; die Löslichkeitsgrenze liegt aber deutlich über den bei den Messungen der hydrolytischen Beständigkeit auftretenden Konzentrationen.

Der Anteil an Anorthit in dem erfindungsgemäßen Glas liegt bei 0 Mol% bis 40 Mol%. Bevorzugte Anteile in dem erfindungsgemäßen Glas sind mindestens 1 Mol%, mindestens 2 Mol%, mindestens 5 Mol% oder besonders bevorzugt mindestens 10 Mol%. Vorzugsweise beträgt der Gehalt an Anorthit höchstens 35 Mol%, weiter bevorzugt höchstens 30 Mol%, weiter bevorzugt höchstens 25 Mol%, weiter bevorzugt höchstens 20 Mol%.

Cordierit, Strontium-Feldspat, Celsian

Aus den oben dargelegten Gründen sind alle Erdalkali-Aluminosilicate erfindungsgemäße konstituierende Phasen.

Unter einem Mol Cordierit wird erfindungsgemäß ein Mol $(2MgO \cdot 2Al_2O_3 \cdot 5SiO_2)/9$ verstanden. Der Anteil an Cordierit in dem erfindungsgemäßen Glas liegt bei 0 Mol% bis 30 Mol%. Bevorzugte Anteile in dem erfindungsgemäßen Glas sind mindestens 1 Mol%, mindestens 2 Mol%, mindestens 3 Mol% oder besonders bevorzugt mindestens 4 Mol%. Vorzugsweise beträgt der Gehalt an Cordierit höchstens 25 Mol%, weiter bevorzugt höchstens 20 Mol%, weiter bevorzugt höchstens 15 Mol%, weiter bevorzugt höchstens 10 Mol%.

Unter einem Mol Strontium-Feldspat wird erfindungsgemäß ein Mol $(SrO \cdot Al_2O_3 \cdot 2SiO_2)/4$ verstanden. Der Anteil an Strontium-Feldspat in dem erfindungsgemäßen Glas liegt bei 0 Mol% bis 40 Mol%. Bevorzugte Anteile in dem erfindungsgemäßen Glas sind mindestens 1 Mol%, mindestens 2 Mol%, mindestens 5 Mol% oder besonders bevorzugt mindestens 10 Mol%. Vorzugsweise beträgt der Gehalt an Strontium-Feldspat höchstens 35 Mol%, weiter bevorzugt höchstens 30 Mol%, weiter bevorzugt höchstens 25 Mol%, weiter bevorzugt höchstens 20 Mol%.

Unter einem Mol Celsian wird erfindungsgemäß ein Mol $(BaO \cdot Al_2O_3 \cdot 2SiO_2)/4$ verstanden. Der Anteil an Celsian in dem erfindungsgemäßen Glas liegt bei 0 Mol% bis 20 Mol%. Bevorzugte Anteile in dem erfindungsgemäßen Glas sind mindestens 1 Mol%, mindestens 2 Mol%, mindestens 3 Mol% oder besonders bevorzugt mindestens 4 Mol%. Vorzugsweise beträgt der Gehalt an Celsian höchstens 17,5 Mol%, weiter bevorzugt höchstens 15 Mol%, weiter bevorzugt höchstens 12,5 Mol%, weiter bevorzugt höchstens 10 Mol%.

Alle Komponenten nehmen als Hydroxide einen Einfluss auf den pH-Wert bei der Messung der hydrolytischen Beständigkeit. Aluminium- und Kalziumhydroxid sind zwar in neutraler wässriger Lösung und schwachen Laugen schwer löslich; die Löslichkeitsgrenze liegt aber deutlich über den bei den Messungen der hydrolytischen Beständigkeit auftretenden Konzentrationen.

Hardystonit

Hardystonit ist wie die oben angegebenen konstituierenden Phasen aus einem Anteil Netzwerkbildner, einem Anteil Zwischenoxid und einem Anteil Netzwerkwandler zusammengesetzt. Es ist von Hause aus kein dreidimensionaler Netzwerkbildner, sondern ein Schichtsilicat. Es leistet aber einen Beitrag zur tetraedrischen Fortsetzung des Netzwerkes, da das darin als Zwischenoxid enthaltene Zink tetraedrisch vorliegt. Im Vergleich zu Aluminium hat es eine geringere Wertigkeit (günstig für die Säureresistenz) und einen größeren Ionenradius (ebenfalls günstig für Säureresistenz). Wegen des sehr hohen Ausdehnungskoeffizienten ist es geeignet, den ausdehnungssenkenden Effekt von Siliziumdioxid zu kompensieren.

Unter einem Mol Hardystonit wird erfindungsgemäß ein Mol $(2CaO \cdot ZnO \cdot 2SiO_2)/5$ verstanden. Der Anteil an Hardystonit in dem erfindungsgemäßen Glas liegt bei 0 Mol% bis 40 Mol%. Bevorzugte Anteile in dem erfindungsgemäßen Glas sind mindestens 1 Mol%, mindestens 2 Mol%, mindestens 5 Mol% oder besonders bevorzugt mindestens 10 Mol%. Vorzugsweise beträgt der Gehalt an Hardystonit höchstens 35 Mol%, weiter bevorzugt höchstens 30 Mol%, weiter bevorzugt höchstens 25 Mol%, weiter bevorzugt höchstens 20 Mol%

Alle Komponenten nehmen als Hydroxide einen Einfluss auf den pH-Wert bei der Messung der hydrolytischen Beständigkeit. Zinkhydroxid ist zwar in neutraler wässriger Lösung schwer löslich; die Löslichkeitsgrenze liegt aber deutlich über den bei den Messungen der hydrolytischen Beständigkeit auftretenden Konzentrationen.

Gittinsit

Gittinsit ist wie die oben angegebenen konstituierenden Phasen aus einem Anteil Netzwerkbildner, einem Anteil Zwischenoxid und einem Anteil Netzwerkwandler zusammengesetzt. Das Kation des Zwischenoxids, nämlich Zirkonium, kann im Falle eines Säureangriffs gemäß DIN 12116 nur schwer aus dem Glas hinausdiffundieren, wie oben dargelegt. Dies ist bezüglich der Säurebeständigkeit von Vorteil und im Hinblick darauf ist Gittinsit ausgewählt worden.

Unter einem Mol Gittinsit wird erfindungsgemäß ein Mol $(CaO \cdot ZrO2 \cdot 2SiO2)/4$ verstanden. Der Anteil an Gittinsit in dem erfindungsgemäßen Glas liegt bei 0 Mol% bis 15 Mol%. Bevorzugte Anteile in dem erfindungsgemäßen Glas sind mindestens 1 Mol%, mindestens 2 Mol%, mindestens 3 Mol% oder besonders bevorzugt mindestens 4 Mol%. Vorzugsweise beträgt der Gehalt an Gittinsit höchstens 17,5 Mol%, weiter bevorzugt höchstens 15 Mol%, weiter bevorzugt höchstens 12,5 Mol%, weiter bevorzugt höchstens 10 Mol%.

Alle Komponenten nehmen als Hydroxide einen Einfluss auf den pH-Wert bei der Messung der hydrolytischen Beständigkeit.

Titanit

Titanit ist wie die oben angegebenen konstituierenden Phasen aus einem Anteil Netzwerkbildner, einem Anteil Zwischenoxid und einem Anteil Netzwerkwandler zusammengesetzt. Das Kation des Zwischenoxids, nämlich Titan, kann im Falle eines Säureangriffs gemäß DIN 12116 nur schwer aus dem Glas hinausdiffundieren, wie oben dargelegt. Dies ist bezüglich der Säurebeständigkeit von Vorteil und im Hinblick darauf ist Titanit ausgewählt worden.

Das enthaltene Titan fällt in wässriger Lösung und Laugen als Titandioxid aus und nimmt keinen Einfluss auf die Messung der hydrolytischen Beständigkeit.

Unter einem Mol Titanit wird ein Mol $(CaO \cdot TiO_2 \cdot SiO_2)/3$ verstanden. Der Anteil an Titanit in dem erfindungsgemäßen Glas liegt bei 0 Mol% bis 10 Mol%. Bevorzugte Anteile in dem erfindungsgemäßen Glas sind mindestens 0,15 Mol%, mindestens 0,25 Mol%, mindestens 0,5 Mol% oder besonders bevorzugt mindestens 1 Mol%. Vorzugsweise beträgt der Gehalt an Titanit höchstens 7,5 Mol%, weiter bevorzugt höchstens 5 Mol%, weiter bevorzugt höchstens 2,5 Mol%, weiter bevorzugt höchstens 1,5 Mol%.

Wollastonit

Wollastonit ist ein Kettensilicat, das für eine Feinjustage des Kalziumanteils aufgenommen werden kann. Unter einem Mol Wollastonit wird ein Mol $(CaO \cdot SiO_2)/2$ verstanden. Der Anteil an Wollastonit in dem erfindungsgemäßen Glas liegt bei 0 Mol% bis 40 Mol%. Bevorzugte Anteile in dem erfindungsgemäßen Glas sind mindestens 1 Mol%, mindestens 2 Mol%, mindestens 5 Mol% oder besonders bevorzugt mindestens 10 Mol%. Vorzugsweise beträgt der Gehalt an Wollastonit höchstens 35 Mol%, weiter bevorzugt höchstens 30 Mol%, weiter bevorzugt höchstens 25 Mol%, weiter bevorzugt höchstens 20 Mol%.

Alle Komponenten nehmen als Hydroxide einen Einfluss auf den pH-Wert bei der Messung der hydrolytischen Beständigkeit.

Weitere Komponenten

Zusätzlich zu den bereits genannten Komponenten kann das Glas weitere Bestandteile enthalten, die hierin als "Rest" bezeichnet werden. Der Anteil des Restes an dem erfindungsgemäßen Glas beträgt vorzugsweise höchstens 3 Mol-%, um die durch sorgsame Auswahl geeigneter Grundgläser eingestellten Glaseigenschaften nicht zu stören. Insbesondere ist der Gehalt an einzelnen Oxiden vorzugsweise auf <0,5 Mol% beschränkt. In besonders bevorzugten Ausführungsformen beträgt der Anteil an Rest in dem Glas höchstens 2 Mol-%, mehr bevorzugt höchstens 1 Mol-% oder höchstens 0,5 Mol%. Der Rest enthält insbesondere Oxide, die nicht in den hierin genannten Grundgläsern enthalten sind. Somit enthält der Rest insbesondere kein $SiO_2$, $Al_2O_3$, $ZrO_2$, $TiO_2$, ZnO, MgO, CaO, SrO, BaO.

Wenn es in dieser Beschreibung heißt, die Gläser seien frei einer Komponente bzw. einer konstituierenden Phase oder enthalten eine gewisse Komponente bzw. konstituierende Phase nicht, so ist damit gemeint, dass diese Komponente bzw. konstituierende Phase allenfalls als Verunreinigung in den Gläsern vorliegen darf. Das bedeutet, dass sie nicht in wesentlichen Mengen zugesetzt wird. Nicht wesentliche Mengen sind erfindungsgemäß Mengen von weniger als 5000 ppm (molar, bezüglich der Oxide), bevorzugt weniger als 4000 ppm (molar, bezüglich der Oxide, weiter bevorzugt weniger als 3000 ppm (molar, bezüglich der Oxide), weiter bevorzugt weniger als 2000 ppm (molar, bezüglich der Oxide), weiter bevorzugt weniger als 1000 ppm (molar, bezüglich der Oxide), bevorzugt weniger als 300 ppm (molar, bezüglich der Oxide), besonders bevorzugt weniger als 100 ppm (molar, bezüglich der Oxide, ganz besonders bevorzugt weniger als 50 ppm (molar, bezüglich der Oxide) und am meisten bevorzugt weniger als 10 ppm (molar, bezüglich der Oxide). Die Gläser dieser Erfindung sind insbesondere frei von Blei, Arsen, Antimon, Wismut und/oder Cadmium.

Wie oben beschrieben ist eine Ursache für die Delamination das Verdampfen von Alkaliboraten oder Bor- bzw. Alkali-Hydroxiden während der Heißumformung. Die Gläser der vorliegenden Erfindung sind daher frei von Bor und frei von Alkalimetallen. Insbesondere sind die Gläser der Erfindung frei von Li, Na, K, Rb und Cs. In anderen Worten enthält das Glas weniger als 5000 ppm (molar, bezüglich der Oxide), bevorzugt weniger als 4000 ppm (molar, bezüglich der Oxide, weiter bevorzugt weniger als 3000 ppm (molar, bezüglich der Oxide), weiter bevorzugt weniger als 2000 ppm (molar, bezüglich der Oxide), weiter bevorzugt weniger als 1000 ppm (molar, bezüglich der Oxide), bevorzugt weniger als 300 ppm (molar, bezüglich der Oxide), besonders bevorzugt weniger als 100 ppm (molar, bezüglich der Oxide, ganz besonders bevorzugt weniger als 50 ppm (molar, bezüglich der Oxide) und am meisten bevorzugt weniger als 10 ppm (molar, bezüglich der Oxide) von jeder der Komponenten $B_2O_3$, $Li_2O$, $Na_2O$, $K_2O$, $Rb_2O$ und $Cs_2O$.

In den Formeln kommt der Rest nicht vor. Alle Rechnungen werden so ausgeführt, als ob der aus den konstituierenden Phasen bestehende Anteil 100% ausmachen würde.

Bevorzugte Glaszusammensetzungen

Die bevorzugten Ausführungsformen ergeben sich im Rahmen des o.a. Grundsystems aus der Vorgabe einer gewünschten thermischen Ausdehnung bzw. eines gewünschten Bereiches für die thermische Ausdehnung.

Die Lösung der erfindungsgemäßen Aufgabe besteht dann darin, unter Einhaltung der Vorgaben eine Kombination einer geringen Abtragrate im alkalischen Milieu (vgl. oben ISO 695), eines geringen pH-Wertes und einer hohen Säurebeständigkeit zu erreichen. Dies geschieht mit Hilfe der o.a. Formeln.

Eine bevorzugte Zusammensetzung ist durch folgende das Glas konstituierende Phasen gekennzeichnet:

**Tabelle 10**

| konstituierende Phase | Min (Mol%) | Max (Mol%) |
|---|---|---|
| Siliziumdioxid | 25 | 75 |
| Wollastonit | 0 | 35 |
| Cordierit | 0 | 25 |
| Anorthit | 0 | 35 |
| Strontium-Feldspat | 1 | 35 |
| Celsian | 0 | 17,5 |
| Hardystonit | 1 | 35 |
| Titanit | 0 | 7,5 |
| Gittinsit | 0 | 10 |

Eine weiter bevorzugte Zusammensetzung ist durch folgende das Glas konstituierende Phasen gekennzeichnet:

**Tabelle 11**

| konstituierende Phase | Min (Mol%) | Max (Mol%) |
| --- | --- | --- |
| Siliziumdioxid | 30 | 70 |
| Wollastonit | 0 | 30 |
| Cordierit | 0 | 20 |
| Anorthit | 0 | 30 |
| Strontium-Feldspat | 2 | 30 |
| Celsian | 0 | 15 |
| Hardystonit | 2 | 30 |
| Titanit | 0 | 5 |
| Gittinsit | 0 | 7,5 |

Eine weiter bevorzugte Zusammensetzung ist durch folgende das Glas konstituierende Phasen gekennzeichnet:

**Tabelle 12**

| konstituierende Phase | Min (Mol%) | Max (Mol%) |
| --- | --- | --- |
| Siliziumdioxid | 35 | 65 |
| Wollastonit | 0 | 25 |
| Cordierit | 0 | 15 |
| Anorthit | 0 | 25 |
| Strontium-Feldspat | 5 | 25 |
| Celsian | 0 | 10 |
| Hardystonit | 3 | 25 |
| Titanit | 0 | 2 |
| Gittinsit | 0 | 5 |

Eine weiter bevorzugte Zusammensetzung ist durch folgende das Glas konstituierende Phasen gekennzeichnet:

**Tabelle 13**

| konstituierende Phase | Min (Mol%) | Max (Mol%) |
| --- | --- | --- |
| Siliziumdioxid | 40 | 60 |
| Wollastonit | 0 | 20 |
| Cordierit | 0 | 10 |
| Anorthit | 0 | 20 |
| Strontium-Feldspat | 7,5 | 20 |
| Celsian | 0 | 5 |
| Hardystonit | 4 | 20 |
| Titanit | 0 | 1 |
| Gittinsit | 0 | 4 |

Herstellung

Erfindungsgemäß ist auch ein Verfahren zur Herstellung eines Glases dieser Erfindung, mit den Schritten:

- Schmelzen der Glasrohstoffe,

- optional Formen eines Glasartikels, insbesondere eines Glasrohres oder einer Glasfaser, aus der Glasschmelze

- Abkühlen des Glases.

Das Formen des Glases kann ein Ziehverfahren umfassen, insbesondere ein Rohrzugverfahren oder ein Ziehverfahren für Flachglas bzw. Fasern. Das Abkühlen kann ein aktives Abkühlen unter Einsatz eines Kühlmittels, z.B. eines Kühlfluids, oder durch passives Abkühlen-lassen durchgeführt werden.

Verwendungen und Glasartikel

Erfindungsgemäß sind neben dem Glas auch aus dem Glas geformte Glasartikel wie Glasrohre und Behälter (wie Flaschen, Ampullen, Karpulen, Spritzen) sowie die Verwendung für die Herstellung von Glasrohren und pharmazeutischen Behältnissen, insbesondere Primärpackmitteln. Bevorzugt sind die Glasartikel zur Verwendung als Packmittel für pharmazeutische Erzeugnisse, insbesondere als Behälter für Flüssigkeiten, bestimmt. In Rahmen dieser Verwendungen sind die hydrolytische und die Laugenbeständigkeit von besonderem Interesse.
Die vorliegende Erfindung betrifft auch die Verwendung des erfindungsgemäßen Glases für faserverstärkte Kunststoffe.

Vergleichsbeispiele aus dem Stand der Technik

**Vergleichsbeispiele 1-10**

Die Vergleichsbeispiele 1-10 sind die dort als mit den Nummern 1-10 versehenen Beispiele der EP0510544. Davon enthalten die Nummern 1-6 und 8-10 > 0,5 Mol% $B_2O_3$ und sind daher nicht erfindungsgemäß. Beispiel 7 hat die Zusammensetzung:

**Tabelle 14**

| | | 7 |
|---|---|---|
| **#** | **Oxid** | **Mol%** |
| 1. | $SiO_2$ | 71,7 |
| 2. | $TiO_2$ | 0 |
| 3. | $ZrO_2$ | 0 |
| 4. | $Al_2O_3$ | 11,1 |
| 5. | ZnO | 0 |
| 6. | MgO | 0 |
| 7. | CaO | 15,2 |
| 8. | SrO | 1 |
| 9. | BaO | 1 |

Die Umrechnung in konstituierende Phasen ergibt:

**Tabelle 15**

| | 7 |
|---|---|
| **konstituierende Phase** | **Mol%** |
| Siliziumdioxid | 21,76 |

(fortgesetzt)

| konstituierende Phase | 7 Mol% |
|---|---|
| Wollastonit | 14,715 |
| Cordierit | 2,8 |
| Anorthit | 22,88 |
| Strontium-Feldspat | 0 |
| Celsian | 12,15 |
| Hardystonit | 0 |
| Titanit | 0 |
| Gittinsit | 21,76 |

Der Anteil an Gittinsit ist zu hoch.
Die berechneten Eigenschaften sind:

**Tabelle 16**

| Lfd. Nr. | ISO 695: berechnete Abtragrate/mg/(dm$^2$3h) | DIN 12116: berechnete Abtragrate/mg/(dm$^2$6h) | Berechneter CTE/(ppm/K) | pH |
|---|---|---|---|---|
| 7 | 95,95507922 | 16,83482898 | 5,342224985 | |

Die berechnete Abtragrate beim Laugentest und beim Säuretest ist zu hoch. Eine Berechnung des pH-Wertes wurde daher nicht ausgeführt.

**Vergleichsbeispiele 11-21**

Die Vergleichsbeispiele 11-21 sind die dort als Glas 1 - 10 bezeichneten Beispiele der US9,061,938. Die Beispiele 5 und 9 enthalten > 0,5 % B2O3 und sind daher nicht erfindungsgemäß. Die anderen Beispiele haben die Zusammensetzung:

**Tabelle 17**

| # | Oxid | 1 Mol% | 2 | 3 | 4 | 6 | 7 | 8 | 10 |
|---|---|---|---|---|---|---|---|---|---|
| 1. | SiO$_2$ | 72,43 | 71,75 | 71,33 | 70,13 | 71,40 | 71,29 | 67,91 | 70,92 |
| 2. | TiO$_2$ | 0,00 | 0,00 | 0,00 | 0,00 | 0,00 | 0,00 | 0,00 | 0,00 |
| 3. | ZrO$_2$ | 0,00 | 0,00 | 0,00 | 0,00 | 0,00 | 0,00 | 0,00 | 0,00 |
| 4. | Al$_2$O$_3$ | 10,70 | 10,60 | 10,54 | 10,36 | 10,81 | 10,89 | 11,67 | 10,71 |
| 5. | ZnO | 0,00 | 0,00 | 0,00 | 0,00 | 0,00 | 0,00 | 0,00 | 0,00 |
| 6. | MgO | 0,00 | 3,37 | 0,00 | 3,30 | 0,00 | 3,40 | 0,00 | 0,33 |
| 7. | CaO | 11,51 | 8,97 | 13,74 | 12,33 | 11,82 | 9,53 | 18,25 | 15,71 |
| 8. | SrO | 1,32 | 1,31 | 1,30 | 1,28 | 0,34 | 0,33 | 0,00 | 1,27 |
| 9. | BaO | 4,03 | 3,99 | 3,09 | 2,60 | 5,64 | 4,56 | 2,17 | 1,07 |

Die Zusammensetzungen sind jeweils unter Weglassung des Restes auf 100% normiert worden. Dieser Rest beträgt einheitlich 0,3 Gewichtsprozent Sn2O3 und für das Beispiel 7 zusätzlich 0,5 Gewichtsprozent B2O3 sowie für das Beispiel 10 zusätzlich 0,2 Gewichtsprozent B2O3.
Die Umrechnung in konstituierende Phasen ergibt:

**Tabelle 18**

| konstituierende Phase | 1 | 2 | 3 | 4 | 6 | 7 | 8 | 10 |
|---|---|---|---|---|---|---|---|---|
| | Mol% | | | | | | | |
| Siliziumdioxid | 44,87 | 41,83 | 42,65 | 38,61 | 42,79 | 40,88 | 35,83 | 41,67 |
| Wollastonit | 12,32 | 14,08 | 15,18 | 18,29 | 13,97 | 13,87 | 17,50 | 15,35 |
| Cordierit | 0,00 | 15,17 | 0,00 | 14,84 | 0,00 | 15,30 | 0,00 | 1,47 |
| Anorthit | 21,40 | 7,72 | 24,60 | 12,73 | 19,33 | 10,39 | 38,00 | 32,15 |
| Strontium-Feldspat | 5,28 | 5,24 | 5,22 | 5,13 | 1,35 | 1,32 | 0,00 | 5,08 |
| Celsian | 16,12 | 15,96 | 12,34 | 10,40 | 22,56 | 18,24 | 8,67 | 4,29 |
| Hardystonit | 0,00 | 0,00 | 0,00 | 0,00 | 0,00 | 0,00 | 0,00 | 0,00 |
| Titanit | 0,00 | 0,00 | 0,00 | 0,00 | 0,00 | 0,00 | 0,00 | 0,00 |
| Gittinsit | 0,00 | 0,00 | 0,00 | 0,00 | 0,00 | 0,00 | 0,00 | 0,00 |

Die berechneten Eigenschaften sind:

**Tabelle 19**

| Lfd. Nr. | ISO 695: berechnete Abtragrate/mg/ ($dm^2 3h$) | DIN 12116: berechnete Abtragrate/mg/ ($dm^2 6h$) | Berechneter CTE/ (ppm/K) | pH |
|---|---|---|---|---|
| 1 | 86,26 | 3,39 | 3,75 | |
| 2 | 86,07 | 3,87 | 3,88 | |
| 3 | 86,17 | 3,62 | 3,89 | |
| 4 | 85,93 | 4,32 | 4,09 | |
| 6 | 89,41 | 3,89 | 3,90 | |
| 7 | 87,20 | 4,54 | 3,93 | |
| 8 | 90,00 | 11,4 | 4,25 | |
| 10 | 83,95 | 4,09 | 3,91 | |

Alle Beispiele haben eine zu hohe berechnete Abtragrate beim Laugentest. Berechnungen des pH-Wertes wurden daher nicht ausgeführt.

**Vergleichsbeispiele 21-51**

Die Vergleichsbeispiele 21 - 51 sind die dort als Glas 1 - 31 bezeichneten Beispiele der US9,670,087. Die Beispiele enthalten alle > 11,5% Al2O3 und sind daher nicht erfindungsgemäß.

**Vergleichsbeispiele 52-59**

Die Vergleichsbeispiele 52-59 sind die dort als Glas 1 - 8 bezeichneten Beispiele der JPH05155638. Glas 8 hat mehr als 0,5 Mol% Na2O. Die anderen Beispiele haben die Zusammensetzung:

**Tabelle 20**

| # | Oxid | 1 | 2 | 3 | 4 | 5 | 6 | 7 |
|---|---|---|---|---|---|---|---|---|
| | | Mol% | | | | | | |
| 1. | $SiO_2$ | 63,21 | 61,97 | 60,70 | 61,91 | 61,19 | 60,97 | 60,42 |
| 2. | $TiO_2$ | 0,78 | 1,26 | 0,63 | 0,79 | 1,27 | 0,95 | 0,66 |

(fortgesetzt)

| # | Oxid | 1 | 2 | 3 | 4 | 5 | 6 | 7 |
|---|------|------|------|------|------|------|------|------|
|   |      | Mol% |   |   |   |   |   |   |
| 3. | $ZrO_2$ | 0,51 | 1,02 | 1,53 | 0,51 | 0,93 | 1,54 | 1,60 |
| 4. | $Al_2O_3$ | 6,44 | 6,49 | 7,10 | 6,53 | 6,54 | 5,58 | 7,39 |
| 5. | ZnO | 2,31 | 2,32 | 0,00 | 2,34 | 2,34 | 3,10 | 3,22 |
| 6. | MgO | 3,88 | 3,91 | 5,47 | 3,93 | 3,94 | 5,49 | 2,44 |
| 7. | CaO | 22,87 | 23,03 | 24,15 | 23,16 | 23,21 | 21,96 | 22,78 |
| 8. | SrO | 0,00 | 0,00 | 0,00 | 0,00 | 0,00 | 0,00 | 0,00 |
| 9. | BaO | 0,00 | 0,00 | 0,41 | 0,83 | 0,58 | 0,41 | 1,50 |

Die Zusammensetzungen sind jeweils unter Weglassung des Restes auf 100% normiert worden. Dieser Rest beträgt einheitlich 0,8 Gewichtsprozent für die Summe aus Na2O und K2O.

Die Umrechnung in konstituierende Phasen ergibt, dass Beispiel 6 nicht zum erfindungsgemäßen Grundsystem gehört. Für die anderen Gläser lautet die Zusammensetzung in konstituierenden Phasen:

**Tabelle 21**

| konstituierende Phase | 1 | 2 | 3 | 4 | 5 | 7 |
|-----------------------|------|------|------|------|------|------|
|                       | Mol% |   |   |   |   |   |
| Siliziumdioxid | 27,56 | 25,57 | 19,30 | 24,98 | 24,02 | 23,49 |
| Wollastonit | 28,81 | 27,04 | 41,52 | 30,83 | 28,62 | 21,27 |
| Cordierit | 17,46 | 17,58 | 24,62 | 17,69 | 17,72 | 10,97 |
| Anorthit | 10,25 | 10,32 | 4,89 | 7,07 | 8,08 | 13,82 |
| Strontium-Feldspat | 0,00 | 0,00 | 0,00 | 0,00 | 0,00 | 0,00 |
| Celsian | 0,00 | 0,00 | 1,64 | 3,31 | 2,32 | 5,98 |
| Hardystonit | 11,53 | 11,61 | 0,00 | 11,68 | 11,70 | 16,10 |
| Titanit | 2,35 | 3,78 | 1,89 | 2,38 | 3,81 | 1,97 |
| Gittinsit | 2,03 | 4,09 | 6,13 | 2,06 | 3,71 | 6,38 |

Beispiel 3 enthält zu viel Wollastonit.

Die berechneten Eigenschaften sind:

**Tabelle 22**

| Lfd. Nr. | ISO 695: berechnete Abtragrate/mg/ $(dm^23h)$ | DIN 12116: berechnete Abtragrate/mg/ $(dm^26h)$ | Berechneter CTE/(ppm/K) | pH |
|----------|-----------------------------------------------|------------------------------------------------|------------------------|------|
| 1 | 86,87 | 2,69 | 5,19 | 9,27 |
| 2 | 89,56 | 3,16 | 5,19 | |
| 3 | 91,25 | 4,57 | 5,2 | |
| 4 | 90,02 | 3,16 | 5,39 | |
| 5 | 91,52 | 3,51 | 5,33 | |
| 7 | 96,38 | 5,49 | 5,38 | |

Sämtliche Beispiele haben eine zu hohe berechnete Abtragrate im Laugentest. Für das Beispiel 1 ist zudem der pH-Wert berechnet worden; er ist sehr hoch. (Notabene: eine pH-Wert-Berechnung, die den o.a. Rest aus 0,8 Gewichtsprozenten Na2O und K2O berücksichtigt, kommt zu einem noch höheren Wert als 9,27, da sowohl Na2O als auch K2O in wässriger Lösung starke Laugen bilden.)

**Vergleichsbeispiele 60-111**

Die Vergleichsbeispiele 60-111 sind die dort als Glas 1-52 bezeichneten Beispiele der US 9,586,854. Die Beispiele 1-48 sowie 51 und 52 enthalten > 2% B2O3 und sind daher nicht erfindungsgemäß. Die anderen Beispiele haben die Zusammensetzung:

**Tabelle 23**

| | | 49 | 50 |
|---|---|---|---|
| # | Oxid | Mol% | |
| 1. | $SiO_2$ | 71.07 | 70,50 |
| 2. | $TiO_2$ | 0.00 | 0,00 |
| 3. | $ZrO_2$ | 0.00 | 0,00 |
| 4. | $Al_2O_3$ | 8.91 | 10,40 |
| 5. | ZnO | 0.00 | 0,00 |
| 6. | MgO | 0.00 | 0,00 |
| 7. | CaO | 17.92 | 16,00 |
| 8. | SrO | 0.00 | 0,00 |
| 9. | BaO | 2.10 | 3,10 |

Die Zusammensetzung von Nr. 49 ist unter Vernachlässigung von 0,1Mol% SnO2 auf 100% normiert worden. Die Zusammensetzung von Nr. 50 in US 9,586,854 summiert sich auf 100,1Mol%, davon 0,1Mol%SnO2; diese sind hier weggelassen worden. Die Umrechnung in konstituierende Phasen ergibt damit:

**Tabelle 24**

| | | 49 | 50 |
|---|---|---|---|
| # | konstituierende Phase | Mol% | |
| 1. | Siliziumdioxid | 42,14 | 41,00 |
| 2. | Wollastonit | 22,22 | 17,40 |
| 3. | Cordierit | 0,00 | 0,00 |
| 4. | Anorthit | 27,23 | 29,20 |
| 5. | Strontium-Feldspat | 0,00 | 0,00 |
| 6. | Celsian | 8,41 | 12,40 |
| 7. | Hardystonit | 0,00 | 0,00 |
| 8. | Titanit | 0,00 | 0,00 |
| 9. | Gittinsit | 0,00 | 0,00 |

Die berechneten Eigenschaften sind:

**Tabelle 25**

| Lfd. Nr. | ISO 695: berechnete Abtragrate/mg/ $(dm^23h)$ | DIN 12116: berechnete Abtragrate/mg/ $(dm^26h)$ | Berechneter CTE/(ppm/K) | pH |
|---|---|---|---|---|
| 49 | 81,99 | 2,28 | 3,99 | 9,105 |
| 50 | 86,16 | 3,77 | 4,00 | |

Für das Beispiel 50 ist die berechnete Abtragrate beim Säuretest zu hoch. Bei beiden Beispielen ist zudem die berechnete Abtragrate im Laugentest zu hoch. Für das Beispiel 49 wurde außerdem eine Berechnung des pH-Wertes durchgeführt; der Wert ist sehr hoch.

**Vergleichsbeispiel 112-116**

Das Vergleichsbeispiele 112-116 sind die dort als Glas 1-5 bezeichneten Beispiele der DE 1816391. Die Beispiele 2-5 enthalten ≥ 12% Al2O3 und sind daher nicht erfindungsgemäß. Beispiel 1 hat die Zusammensetzung:

**Tabelle 26**

|  |  | 1 |
| --- | --- | --- |
| # | Oxid | Mol% |
| 1. | $SiO_2$ | 75,9 |
| 2. | $TiO_2$ | 0 |
| 3. | $ZrO_2$ | 0 |
| 4. | $Al_2O_3$ | 11,4 |
| 5. | ZnO | 0 |
| 6. | MgO | 0 |
| 7. | CaO | 0 |
| 8. | SrO | 0 |
| 9. | BaO | 12,7 |

Die Umrechnung in konstituierende Phasen ergibt, dass Beispiel 1 nicht zum erfindungsgemäßen Grundsystem gehört.

**Vergleichsbeispiele 117-126**

Die Vergleichsbeispiele 117-126 sind die dort als Glas I-X bezeichneten Beispiele der US 4,012,263. Sie anderen Beispiele haben die Zusammensetzung:

**Tabelle 27**

| # | Oxid | I | II | III | IV | V | VI | VII | VIII | IX | X |
| --- | --- | --- | --- | --- | --- | --- | --- | --- | --- | --- | --- |
|  |  | Mol% |  |  |  |  |  |  |  |  |  |
| 1. | $SiO_2$ | 71 | 70,00 | 71,00 | 71,00 | 66,00 | 75,90 | 66,00 | 68,00 | 66,00 | 67,00 |
| 2. | $TiO_2$ | 0 | 0,00 | 0,00 | 0,00 | 0,00 | 0,00 | 0,00 | 0,00 | 0,00 | 0,00 |
| 3. | $ZrO_2$ | 0 | 0,00 | 0,00 | 0,00 | 0,00 | 0,00 | 0,00 | 0,00 | 0,00 | 0,00 |
| 4. | $Al_2O_3$ | 8 | 8,00 | 10,00 | 9,00 | 8,00 | 7,70 | 8,00 | 8,00 | 8,00 | 8,00 |
| 5. | ZnO | 0 | 0,00 | 0,00 | 0,00 | 0,00 | 0,00 | 0,00 | 0,00 | 0,00 | 0,00 |
| 6. | MgO | 0 | 0,00 | 0,00 | 0,00 | 0,00 | 0,00 | 0,00 | 0,00 | 4,00 | 4,00 |
| 7. | CaO | 11 | 11,00 | 10,00 | 10,00 | 13,00 | 0,00 | 18,00 | 17,00 | 15,00 | 14,00 |
| 8. | SrO | 0,00 | 0,00 | 0,00 | 0,00 | 0,00 | 0,00 | 0,00 | 0,00 | 0,00 | 0,00 |
| 9. | BaO | 10,00 | 11,00 | 9,00 | 10,00 | 13,00 | 16,40 | 8,00 | 7,00 | 7,00 | 7,00 |

Die Umrechnung in konstituierende Phasen ergibt, dass die Beispiele I, II, IV-VI, IX, X nicht zum erfindungsgemäßen Grundsystem gehören. Für die anderen Beispiele ergibt sich:

**Tabelle 28**

| # | konstituierende Phase | III | VII | VIII |
|---|---|---|---|---|
| | | Mol% | | |
| 1. | Siliziumdioxid | 42,00 | 32,00 | 36,00 |
| 2. | Wollastonit | 18,00 | 36,00 | 32,00 |
| 3. | Cordierit | 0,00 | 0,00 | 0,00 |
| 4. | Anorthit | 4,00 | 0,00 | 4,00 |
| 5. | Strontium-Feldspat | 0,00 | 0,00 | 0,00 |
| 6. | Celsian | 36,00 | 32,00 | 28,00 |
| 7. | Hardystonit | 0,00 | 0,00 | 0,00 |
| 8. | Titanit | 0,00 | 0,00 | 0,00 |
| 9. | Gittinsit | 0,00 | 0,00 | 0,00 |

Die Beispiele enthalten also zu viel Celsian.

Die berechneten Eigenschaften sind:

**Tabelle 29**

| Lfd. Nr. | ISO 695: berechnete Abtragrate/mg/ $(dm^2 3h)$ | DIN 12116: berechnete Abtragrate/mg/ $(dm^2 6h)$ | Berechneter CTE/(ppm/K) | pH |
|---|---|---|---|---|
| III | 86,16 | 3,77 | 4,00 | |
| VII | 96,4 | 2,73 | 4,84 | 9,241 |
| VIII | 91,98 | 2,31 | 4,54 | 9,198 |

Für das Beispiel III ist die berechnete Abtragrate beim Säuretest zu hoch. Für alle drei Beispiele sind die berechneten Abtragraten beim Laugentest zu hoch. Außerdem sind die berechneten pH-Werte der Beispiele VII und VIII sehr hoch.

**Vergleichsbeispiele 127-133**

Die Vergleichsbeispiele 127-133 sind die dort als Glas 1-7 bezeichneten Beispiele der EP0048120. Sie haben die Zusammensetzung:

**Tabelle 30**

| # | Oxid | 1 | 2 | 3 | 4 | 5 | 6 | 7 |
|---|---|---|---|---|---|---|---|---|
| | | Mol% | | | | | | |
| 1. | $SiO_2$ | 71,78 | 71,68 | 71,69 | 71,97 | 73,01 | 71,73 | 71,72 |
| 2. | $TiO_2$ | 0,00 | 0,00 | 0,00 | 0,00 | 0,00 | 0,00 | 0,00 |
| 3. | $ZrO_2$ | 0,00 | 0,00 | 0,00 | 0,00 | 0,00 | 0,00 | 0,00 |
| 4. | $Al_2O_3$ | 11,12 | 11,13 | 11,13 | 10,84 | 10,96 | 11,09 | 11,09 |
| 5. | ZnO | 0,00 | 0,00 | 0,00 | 0,00 | 0,00 | 0,00 | 0,00 |
| 6. | MgO | 0,00 | 0,00 | 0,00 | 0,00 | 0,00 | 0,00 | 0,00 |
| 7. | CaO | 15,08 | 15,17 | 14,11 | 17,19 | 14,02 | 14,11 | 15,18 |
| 8. | SrO | 1,01 | 0,00 | 2,04 | 0,00 | 2,01 | 1,03 | 2,01 |
| 9. | BaO | 1,00 | 2,02 | 1,03 | 0,00 | 0,00 | 2,04 | 0,00 |

Die Umrechnung in konstituierende Phasen ergibt:

**Tabelle 31**

| # | konstituierende Phase | 1 | 2 | 3 | 4 | 5 | 6 | 7 |
|---|---|---|---|---|---|---|---|---|
| | | Mol% | | | | | | |
| 1. | Siliziumdioxid | 43,57 | 43,36 | 43,38 | 43,95 | 46,02 | 43,46 | 43,44 |
| 2. | Wollastonit | 11,95 | 12,13 | 12,11 | 12,70 | 10,13 | 12,18 | 12,20 |
| 3. | Cordierit | 0,00 | 0,00 | 0,00 | 0,00 | 0,00 | 0,00 | 0,00 |
| 4. | Anorthit | 36,42 | 36,42 | 32,23 | 43,36 | 35,82 | 32,09 | 36,34 |
| 5. | Strontium-Feldspat | 4,05 | 0,00 | 8,15 | 0,00 | 8,03 | 4,11 | 8,03 |
| 6. | Celsian | 4,02 | 8,09 | 4,13 | 0,00 | 0,00 | 8,16 | 0,00 |
| 7. | Hardystonit | 0,00 | 0,00 | 0,00 | 0,00 | 0,00 | 0,00 | 0,00 |
| 8. | Titanit | 0,00 | 0,00 | 0,00 | 0,00 | 0,00 | 0,00 | 0,00 |
| 9. | Gittinsit | 0,00 | 0,00 | 0,00 | 0,00 | 0,00 | 0,00 | 0,00 |

Beispiel 4 enthält zu viel Anorthit.

Die berechneten Eigenschaften sind:

**Tabelle 32**

| Lfd. Nr. | ISO 695: berechnete Abtragrate/mg/ (dm$^2$3h) | DIN 12116: berechnete Abtragrate/mg/ (dm$^2$6h) | Berechneter CTE/ (ppm/K) | pH |
|---|---|---|---|---|
| 1 | 83,21 | 4,26 | 3,77 | |
| 2 | 84,07 | 4,31 | 3,79 | |
| 3 | 84,10 | 4,32 | 3,79 | |
| 4 | 80,49 | 3,78 | 3,74 | |
| 5 | 80,76 | 3,51 | 3,62 | |
| 6 | 84,71 | 4,21 | 3,79 | |
| 7 | 82,54 | 4,27 | 3,78 | |

Die berechneten Abtragraten beim Säuretest sind zu hoch.

**Vergleichsbeispiele 134-241**

Die Vergleichsbeispiele 134-241 sind die dort in Tabelle 1, Nummern 1-99 sowie in Tabelle 2, Nummern 1-9 aufgeführten Beispiele der WO2013130695. Die Gläser aus Tabelle 1, Nummern 1-99 haben einen zu hohen Borgehalt. Das Gleiche gilt für die Gläser aus Tabelle 2, Nummern 1 und 3-9. Das Glas aus Tabelle 2, Nummer 2 hat die Zusammensetzung:

**Tabelle 33**

| # | Oxid | 2 Mol% |
|---|---|---|
| 1. | $SiO_2$ | 72,09 |
| 2. | $TiO_2$ | 0 |
| 3. | $ZrO_2$ | 0,02 |
| 4. | $Al_2O_3$ | 10,81 |

(fortgesetzt)

|  |  | **2** |
|---|---|---|
| **#** | **Oxid** | **Mol%** |
| 5. | ZnO | 0 |
| 6. | MgO | 5,34 |
| 7. | CaO | 5,84 |
| 8. | SrO | 1,52 |
| 9. | BaO | 4,22 |

Der Rest besteht aus 0,14Mol%SnO2 und 0,02Mol%Fe2O3. Die Umrechnung in konstituierende Phasen ergibt, dass das Glas nicht zum erfindungsgemäßen Grundsystem gehört.

**Vergleichsbeispiele 242-362**

Die Vergleichsbeispiele 242-362 sind die dort mit den Nummern 1-121 bezeichneten Beispiele der WO2012103194. Die Nummern 1-12, 14-18, 20-25, 28-29, 31-35, 38-50, 54-57, 59-60, 62-67, 70-72, 74-75, 77-81, 83-90, 92, 94-102, 104-105, 107-109, 111, 114-116, 119-121 haben entweder einen zu hohen Al2O3- oder einen zu hohen B2O3-Gehalt. Die anderen Gläser haben die Zusammensetzungen:

**Tabelle 34**

| # | Oxid | 13 | 19 | 26 | 27 | 30 | 36 | 37 | 51 |
|---|---|---|---|---|---|---|---|---|---|
| # | Oxid | Mol% | | | | | | | |
| 1. | SiO$_2$ | 73,69 | 72,87 | 71,82 | 72,80 | 72,94 | 72,91 | 72,92 | 72,89 |
| 2. | TiO$_2$ | 0,00 | 0,00 | 0,00 | 0,00 | 0,00 | 0,00 | 0,00 | 0,00 |
| 3. | ZrO$_2$ | 0,00 | 0,02 | 0,03 | 0,02 | 0,02 | 0,02 | 0,02 | 0,02 |
| 4. | Al$_2$O$_3$ | 11,39 | 11,40 | 11,26 | 11,40 | 11,38 | 11,39 | 11,39 | 11,39 |
| 5. | ZnO | 0,00 | 0,00 | 0,00 | 0,00 | 0,00 | 0,00 | 0,00 | 0,00 |
| 6. | MgO | 4,74 | 4,92 | 5,96 | 3,89 | 4,86 | 4,30 | 5,39 | 5,13 |
| 7. | CaO | 5,12 | 5,45 | 5,51 | 5,75 | 5,74 | 5,73 | 5,20 | 5,34 |
| 8. | SrO | 1,32 | 1,68 | 1,03 | 2,83 | 0,92 | 2,08 | 0,88 | 1,14 |
| 9. | BaO | 3,75 | 3,65 | 4,39 | 3,31 | 4,14 | 3,58 | 4,20 | 4,09 |

**Tabelle 35**

| # | Oxid | 52 | 53 | 58 | 61 | 68 | 69 | 73 | 76 |
|---|---|---|---|---|---|---|---|---|---|
| # | Oxid | Mol% | | | | | | | |
| 1. | SiO$_2$ | 72,76 | 73,70 | 72,83 | 72,95 | 71,88 | 72,85 | 71,93 | 72,83 |
| 2. | TiO$_2$ | 0,00 | 0,00 | 0,00 | 0,00 | 0,00 | 0,00 | 0,00 | 0,00 |
| 3. | ZrO$_2$ | 0,02 | 0,00 | 0,00 | 0,00 | 0,02 | 0,02 | 0,02 | 0,02 |
| 4. | Al$_2$O$_3$ | 11,45 | 11,39 | 11,43 | 11,39 | 11,28 | 11,44 | 11,51 | 11,39 |
| 5. | ZnO | 0,00 | 0,00 | 0,00 | 0,00 | 0,00 | 0,00 | 0,00 | 0,00 |
| 6. | MgO | 5,16 | 4,74 | 4,96 | 4,88 | 5,35 | 5,08 | 5,62 | 5,19 |
| 7. | CaO | 4,81 | 5,11 | 5,46 | 5,54 | 5,76 | 5,35 | 5,49 | 5,26 |
| 8. | SrO | 2,22 | 1,32 | 1,50 | 0,93 | 1,52 | 0,63 | 1,44 | 0,04 |

(fortgesetzt)

| | | 52 | 53 | 58 | 61 | 68 | 69 | 73 | 76 |
|---|---|---|---|---|---|---|---|---|---|
| # | Oxid | Mol% | | | | | | | |
| 9. | BaO | 3,59 | 3,74 | 3,83 | 4,32 | 4,19 | 4,64 | 3,99 | 5,27 |

**Tabelle 36**

| | | 82 | 91 | 93 | 106 | 110 | 112 | 113 | 117 | 118 |
|---|---|---|---|---|---|---|---|---|---|---|
| # | Oxid | | | | | Mol% | | | | |
| 1. | $SiO_2$ | 72,57 | 72,86 | 71,85 | 71,57 | 72,84 | 72,90 | 72,73 | 72,83 | 71,99 |
| 2. | $TiO_2$ | 0,00 | 0,00 | 0,00 | 0,00 | 0,00 | 0,00 | 0,00 | 0,00 | 0,00 |
| 3. | $ZrO_2$ | 0,02 | 0,02 | 0,03 | 0,02 | 0,02 | 0,02 | 0,02 | 0,02 | 0,02 |
| 4. | $Al_2O_3$ | 11,48 | 11,39 | 11,39 | 11,45 | 11,42 | 11,39 | 11,38 | 11,50 | 11,49 |
| 5. | ZnO | 0,00 | 0,00 | 0,00 | 0,00 | 0,00 | 0,00 | 0,00 | 0,00 | 0,00 |
| 6. | MgO | 5,35 | 5,57 | 5,84 | 6,11 | 4,93 | 4,94 | 5,28 | 4,96 | 5,67 |
| 7. | CaO | 5,31 | 3,87 | 5,49 | 5,45 | 5,55 | 5,47 | 5,08 | 5,40 | 5,47 |
| 8. | SrO | 0,37 | 3,09 | 1,08 | 1,43 | 1,17 | 1,37 | 3,30 | 1,46 | 1,12 |
| 9. | BaO | 4,91 | 3,19 | 4,33 | 3,97 | 4,07 | 3,91 | 2,20 | 3,83 | 4,25 |

Die Zusammensetzungen von 13, 53 wurden unter Vernachlässigung von 0,12mol% SnO2 und 0,01mol% Fe2O3 auf 100% normiert. Die Zusammensetzungen von 19, 27, 30, 36, 37, 51, 52, 58, 61, 69, 76, 82, 91, 110, 112-113 wurden unter Vernachlässigung von 0,11mol% SnO2 und 0,02mol% Fe2O3 auf 100% normiert. Die Zusammensetzungen von 26, 103 wurden unter Vernachlässigung von 0,11mol% SnO2 und 0,05mol% Fe2O3 auf 100% normiert. Die Zusammensetzungen von 68, 73, 106 wurden unter Vernachlässigung von 0,16mol% SnO2 und 0,02mol% Fe2O3 auf 100% normiert. Die Zusammensetzungen von 93 wurden unter Vernachlässigung von 0,11mol% SnO2 und 0,04mol% Fe2O3 auf 100% normiert. Die Zusammensetzungen von 117 wurden unter Vernachlässigung von 0,15mol% SnO2 und 0,02mol% Fe2O3 auf 100% normiert. Die Zusammensetzungen von 118 wurden unter Vernachlässigung von 0,11 mol% SnO2 und 0,03mol% Fe2O3 auf 100% normiert. Die Umrechnung in konstituierende Phasen ergibt, daß die Nummern 91 und 106 nicht zum erfindungsgemäßen Grundsystem gehören. Für die restlichen Gläser lautet die Zusammensetzung in konstituierenden Phasen:

**Tabelle 37**

| | | 13 | 19 | 26 | 27 | 30 | 36 | 37 | 51 |
|---|---|---|---|---|---|---|---|---|---|
| # | konstituierende Phase | Mol% | | | | | | | |
| 1. | Siliziumdioxid | 45,02 | 43,29 | 40,67 | 43,66 | 43,46 | 43,67 | 43,16 | 43,23 |
| 2. | Wollastonit | 7,07 | 8,55 | 11,20 | 8,73 | 8,49 | 8,55 | 8,49 | 8,55 |
| 3. | Cordierit | 21,31 | 22,12 | 26,82 | 17,48 | 21,85 | 19,33 | 24,24 | 23,07 |
| 4. | Anorthit | 6,33 | 4,61 | -0,48 | 5,45 | 5,89 | 5,73 | 3,72 | 4,17 |
| 5. | Strontium-Feldspat | 5,29 | 6,73 | 4,13 | 11,34 | 3,68 | 8,33 | 3,52 | 4,57 |
| 6. | Celsian | 14,98 | 14,62 | 17,55 | 13,26 | 16,54 | 14,30 | 16,78 | 16,34 |
| 7. | Hardystonit | 0,00 | 0,00 | 0,00 | 0,00 | 0,00 | 0,00 | 0,00 | 0,00 |
| 8. | Titanit | 0,00 | 0,00 | 0,00 | 0,00 | 0,00 | 0,00 | 0,00 | 0,00 |
| 9. | Gittinsit | 0,00 | 0,08 | 0,12 | 0,08 | 0,08 | 0,08 | 0,08 | 0,08 |

# EP 3 670 460 A1

**Tabelle 38**

|  |  | 52 | 53 | 58 | 61 | 68 | 69 | 73 | 76 |
|---|---|---|---|---|---|---|---|---|---|
| # | konstituierende Phase | Mol% |  |  |  |  |  |  |  |
| 1. | Siliziumdioxid | 42,95 | 45,02 | 43,17 | 43,45 | 41,09 | 43,17 | 41,05 | 43,08 |
| 2. | Wollastonit | 8,61 | 7,03 | 8,63 | 8,55 | 11,04 | 8,47 | 10,02 | 8,67 |
| 3. | Cordierit | 23,21 | 21,31 | 22,31 | 21,95 | 24,07 | 22,85 | 25,29 | 23,34 |
| 4. | Anorthit | 1,92 | 6,37 | 4,57 | 5,05 | 0,88 | 4,37 | 1,84 | 3,60 |
| 5. | Strontium-Feldspat | 8,89 | 5,29 | 6,01 | 3,73 | 6,09 | 2,52 | 5,77 | 0,16 |
| 6. | Celsian | 14,34 | 14,98 | 15,30 | 17,27 | 16,75 | 18,55 | 15,95 | 21,07 |
| 7. | Hardystonit | 0,00 | 0,00 | 0,00 | 0,00 | 0,00 | 0,00 | 0,00 | 0,00 |
| 8. | Titanit | 0,00 | 0,00 | 0,00 | 0,00 | 0,00 | 0,00 | 0,00 | 0,00 |
| 9. | Gittinsit | 0,08 | 0,00 | 0,01 | 0,00 | 0,08 | 0,08 | 0,08 | 0,08 |

**Tabelle 39**

|  |  | 82 | 93 | 110 | 112 | 113 | 117 | 118 |
|---|---|---|---|---|---|---|---|---|
| # | konstituierende Phase | Mol% |  |  |  |  |  |  |
| 1. | Siliziumdioxid | 42,47 | 40,78 | 43,23 | 43,34 | 42,83 | 43,19 | 41,14 |
| 2. | Wollastonit | 8,87 | 10,64 | 8,53 | 8,53 | 8,91 | 8,25 | 9,99 |
| 3. | Cordierit | 24,06 | 26,27 | 22,17 | 22,21 | 23,75 | 22,31 | 25,51 |
| 4. | Anorthit | 3,40 | 0,56 | 5,05 | 4,73 | 2,40 | 5,01 | 1,80 |
| 5. | Strontium-Feldspat | 1,48 | 4,33 | 4,69 | 5,49 | 13,22 | 5,85 | 4,49 |
| 6. | Celsian | 19,63 | 17,31 | 16,26 | 15,62 | 8,81 | 15,31 | 16,99 |
| 7. | Hardystonit | 0,00 | 0,00 | 0,00 | 0,00 | 0,00 | 0,00 | 0,00 |
| 8. | Titanit | 0,00 | 0,00 | 0,00 | 0,00 | 0,00 | 0,00 | 0,00 |
| 9. | Gittinsit | 0,08 | 0,12 | 0,08 | 0,08 | 0,08 | 0,08 | 0,08 |

Für Beispiel 26 ergibt sich ein negativer Anorthit-Gehalt, so dass Beispiel 26 nicht zum erfindungsgemäßen Grundsystem gehört. Beispiel 76 enthält außerdem zu viel Celsian.

Die berechneten Eigenschaften sind:

| Lfd. Nr. | ISO 695: berechnete Abtragrate/mg/ $(dm^23h)$ | DIN 12116: berechnete Abtragrate/mg/ $(dm^26h)$ | Berechneter CTE/ (ppm/K) | pH |
|---|---|---|---|---|
|  | 83,92 | 4,29 | 3,60 |  |
| 19 | 85,1 | 4,81 | 3,71 |  |
| 26 | 86,59 | 5,40 | 3,86 |  |
| 27 | 85,78 | 4,67 | 3,71 |  |
| 30 | 85,14 | 4,71 | 3,70 |  |
| 36 | 85,36 | 4,65 | 3,70 |  |
| 37 | 85,09 | 4,83 | 3,70 |  |
| 51 | 85,23 | 4,81 | 3,71 |  |
| 52 | 85,52 | 5,00 | 3,72 |  |

(fortgesetzt)

| Lfd. Nr. | ISO 695: berechnete Abtragrate/mg/ (dm$^2$3h) | DIN 12116: berechnete Abtragrate/mg/ (dm$^2$6h) | Berechneter CTE/ (ppm/K) | pH |
|---|---|---|---|---|
| 53 | 83,93 | 4,30 | 3,60 | |
| 58 | 85,28 | 4,89 | 3,72 | |
| 61 | 85,38 | 4,71 | 3,70 | |
| 68 | 86,76 | 5,28 | 3,85 | |
| 69 | 85,77 | 4,89 | 3,71 | |
| 73 | 86,60 | 5,90 | 3,83 | |
| 76 | 86,18 | 4,82 | 3,72 | |
| 82 | 86,32 | 5,21 | 3,75 | |
| 93 | 86,72 | 5,68 | 3,85 | |
| 110 | 83,92 | 4,29 | 3,60 | |
| 112 | 85,17 | 4,77 | 3,70 | |
| 113 | 84,26 | 4,96 | 3,72 | |
| 117 | 85,36 | 5,03 | 3,71 | |
| 118 | 86,62 | 5,79 | 3,83 | |

Die berechneten Abtragraten beim Laugentest und beim Säuretest sind alle zu hoch. Auf pH-Berechnungen wurde verzichtet.

**Vergleichsbeispiele 363-392**

Die Vergleichsbeispiele 363-392 sind die dort als Glas 1-3,6,8-15,54-58,67-68,75-77,81,94-96, 100,108-110 bezeichneten Beispiele der WO0242233. Davon haben die Gläser 3, 6, 9-15,54-58,67-68,75-77,81,94-96, 100,108-110 zu hohe Aluminiumgehalte. Die Gläser 1,2, 8 haben die Zusammensetzung:

**Tabelle 40**

| # | Oxid | 1 | 2 | 8 |
|---|---|---|---|---|
| | | Mol% | | |
| 1. | SiO$_2$ | 64,93 | 68,88 | 70,89 |
| 2. | TiO$_2$ | 0,00 | 0,00 | 0,00 |
| 3. | ZrO$_2$ | 0,00 | 0,00 | 0,00 |
| 4. | Al$_2$O$_3$ | 9,26 | 10,54 | 11,19 |
| 5. | ZnO | 0,00 | 0,00 | 0,00 |
| 6. | MgO | 0,00 | 0,00 | 0,00 |
| 7. | CaO | 25,81 | 20,58 | 17,92 |
| 8. | SrO | 0,00 | 0,00 | 0,00 |
| 9. | BaO | 0,00 | 0,00 | 0,00 |

Die Umrechnung in konstituierende Phasen ergibt:

**Tabelle 41**

|  |  | 1 | 2 | 8 |
|---|---|---|---|---|
| # | konstituierende Phase | Mol% |  |  |
| 1. | Siliziumdioxid | 29,86 | 37,76 | 41,78 |
| 2. | Wollastonit | 33,10 | 20,08 | 13,46 |
| 3. | Cordierit | 0,00 | 0,00 | 0,00 |
| 4. | Anorthit | 37,04 | 42,16 | 44,76 |
| 5. | Strontium-Feldspat | 0,00 | 0,00 | 0,00 |
| 6. | Celsian | 0,00 | 0,00 | 0,00 |
| 7. | Hardystonit | 0,00 | 0,00 | 0,00 |
| 8. | Titanit | 0,00 | 0,00 | 0,00 |
| 9. | Gittinsit | 0,00 | 0,00 | 0,00 |

Die Beispiele 2 und 8 enthalten zu viel Anorthit.

Die berechneten Eigenschaften sind:

**Tabelle 42**

| Lfd. Nr. | ISO 695: berechnete Abtragrate/mg/ $(dm^2 3h)$ | DIN 12116: berechnete Abtragrate/mg/ $(dm^2 6h)$ | Berechneter CTE/ (ppm/K) | pH |
|---|---|---|---|---|
| 1 | 87,31 | 5,02 | 4,78 |  |
| 2 | 83,97 | 5,00 | 4,16 |  |
| 3 | 82,30 | 4,98 | 3,86 |  |

Die berechneten Abtragraten beim Laugentest und beim Säuretest sind alle zu hoch. Auf pH-Berechnungen wurde verzichtet.

**Vergleichsbeispiele 393-408**

Die Vergleichsbeispiele 393-408 sind die dort als Glas 1-5 sowie C1-C11 bezeichneten Beispiele der WO2015009483. Sie haben alle einen zu hohen Aluminium- bzw. Borgehalt. Bemerkenswert sind die hohen, z.T. sehr hohen, nach DIN 12116 gemessenen Werte für die Abtragraten beim Säuretest.

**Vergleichsbeispiele 409-422**

Die Vergleichsbeispiele 409-418 sind die dort als Beispiele 1-11 sowie Vergleichsbeispiel V1-V4 bezeichneten Beispiele der DE102017102900. Sie haben alle eine zu hohe Abtragrate beim Säuretest.

Ausführungsbeispiele der Erfindung

Die folgenden Beispiel A1-A9 sind Ausführungsbeispiele der vorliegenden Erfindung.

**Tabelle 43**

|  |  | A1 | A2 | A3 | A4 | A5 | A6 | A7 | A8 | A9 |
|---|---|---|---|---|---|---|---|---|---|---|
| # | konstituierende Phase | Mol % |  |  |  |  |  |  |  |  |
| 1. | Siliziumdioxid | 56 | 55,5 | 53,5 | 52,5 | 50 | 47,5 | 42 | 42 | 41 |
| 2. | Wollastonit | 0 | 0 | 0 | 1 | 5 | 12,5 | 23 | 23 | 23 |
| 3. | Cordierit | 0 | 4,5 | 4,5 | 4,5 | 0 | 0 | 0 | 0 | 9 |

(fortgesetzt)

| # | konstituierende Phase | A1 | A2 | A3 | A4 | A5 | A6 | A7 | A8 | A9 |
|---|---|---|---|---|---|---|---|---|---|---|
| | | Mol % | | | | | | | | |
| 4. | Anorthit | 0 | 0 | 0 | 0 | 10 | 17,5 | 20 | 20 | 27 |
| 5. | Strontium-Feldspat | 20 | 16 | 18 | 18 | 15 | 10 | 10 | 15 | 0 |
| 6. | Celsian | 0 | 0 | 0 | 0 | 0 | 0 | 0 | 0 | 0 |
| 7. | Hardystonit | 20 | 20 | 20 | 20 | 20 | 12,5 | 5 | 0 | 0 |
| 8. | Titanit | 0 | 0 | 0 | 0 | 0 | 0 | 0 | 0 | 0 |
| 9. | Gittinsit | 4 | 4 | 4 | 4 | 0 | 0 | 0 | 0 | 0 |

Die berechneten Eigenschaften sind:

**Tabelle 44**

| Lfd. Nr. | ISO 695: berechnete Abtragrate/mg/ $(dm^2 3h)$ | DIN 12116: berechnete Abtragrate/mg/ $(dm^2 6h)$ | Berechneter CTE/(ppm/K) | pH |
|---|---|---|---|---|
| A1 | 73,64 | 0,82 | 3,61 | 8,998 |
| A2 | 72,78 | 0,83 | 3,61 | 8,998 |
| A3 | 74,92 | 0,97 | 3,72 | 9,014 |
| A4 | 75,52 | 0,99 | 3,79 | 9,028 |
| A5 | 77,24 | 1,21 | 4,12 | 9,086 |
| A6 | 77,29 | 1,36 | 4,06 | 9,096 |
| A7 | 80,04 | 1,72 | 4,21 | 9,143 |
| A8 | 81,54 | 2,21 | 4,02 | 9,112 |
| A9 | 78.43 | 2,29 | 4,004 | 9,112 |

Gegenüber dem oben ausführlich dargelegten Stand der Technik zeichnen sich die Gläser der vorliegenden Erfindung hinsichtlich ihrer chemischen Beständigkeit insbesondere dadurch aus, dass sie bei jeweils vergleichbarer thermischer Ausdehnung sowohl eine sehr gute Laugen- und Säurebeständigkeit als auch eine sehr gute hydrolytische Beständigkeit aufweisen.

**Patentansprüche**

1. Glas, mit einer Zusammensetzung, die durch die folgenden das Glas konstituierenden Phasen gekennzeichnet ist:

| konstituierende Phase | Min (Mol%) | Max (Mol%) |
|---|---|---|
| Siliziumdioxid | 20 | 80 |
| Wollastonit | 0 | 40 |
| Cordierit | 0 | 30 |
| Anorthit | 0 | 40 |
| Strontium-Feldspat | 0 | 40 |
| Celsian | 0 | 20 |
| Hardystonit | 0 | 40 |
| Titanit | 0 | 10 |

(fortgesetzt)

| konstituierende Phase | Min (Mol%) | Max (Mol%) |
|---|---|---|
| Gittinsit | 0 | 15 |

wobei das Glas bei Angabe der Zusammensetzung in Mol% bezüglich der Oxide weniger als 11,5 Mol% $Al_2O_3$ und jeweils weniger als 5000 ppm (molar, bezüglich der Oxide) $B_2O_3$, $Li_2O$, $Na_2O$, $K_2O$, $Rb_2O$ und $C_{S2}O$ enthält, wobei der berechnete Wert für die Abtragrate nach ISO 695 maximal 81,9 mg/(dm$^2$3h) beträgt und wobei der berechnete Wert für die Abtragrate in Säure gemäß DIN12116 weniger als 3,5 mg(dm$^2$6h) beträgt.

2. Glas nach Anspruch 1 mit einem Celsian-Anteil von höchstens 15 Mol%.

3. Glas nach mindestens einem der vorhergehenden Ansprüche mit einem Strontium-Feldspat-Anteil von mindestens 1 Mol%.

4. Glas nach mindestens einem der vorhergehenden Ansprüche, wobei der Anteil zusätzlich zu den konstituierenden Phasen vorhandener Komponenten an dem Glas höchstens 3 Mol-% beträgt.

5. Glas nach mindestens einem der vorhergehenden Ansprüche, mit einer Zusammensetzung, die durch die folgenden das Glas konstituierenden Phasen gekennzeichnet ist:

| konstituierende Phase | Min (Mol%) | Max (Mol%) |
|---|---|---|
| Siliziumdioxid | 25 | 75 |
| Wollastonit | 0 | 35 |
| Cordierit | 0 | 25 |
| Anorthit | 0 | 35 |
| Strontium-Feldspat | 1 | 35 |
| Celsian | 0 | 17,5 |
| Hardystonit | 1 | 35 |
| Titanit | 0 | 7,5 |
| Gittinsit | 0 | 10 |

6. Glas nach mindestens einem der vorhergehenden Ansprüche, mit einer Abtragrate in Säure gemäß DIN12116 von < 3 mg(dm$^2$6h), einer Abtragrate nach ISO 695 von maximal 81,8 mg/(dm$^2$3h) und/oder einem CTE von 3 bis 6 ppm/K.

7. Glas nach mindestens einem der vorhergehenden Ansprüche, wobei sich nach Auflösung von 50 $\mu$mol des Glases in Neutralwasser ein pH-Wert von weniger als 9,15 ergibt.

8. Verwendung eines Glases nach mindestens einem der vorhergehenden Ansprüche zur Herstellung von Behältnissen, insbesondere pharmazeutischen Behältnissen.

9. Verfahren zur Herstellung eines Glases nach mindestens einem der Ansprüche 1 bis 7, mit den Schritten:

   - Schmelzen von Glasrohstoffen,
   - Abkühlen des erhaltenen Glases.

10. Verfahren nach Anspruch 9 mit dem Schritt

   - Herstellung eines geformten Glasartikels, insbesondere mittels Rohrzugverfahren.

**Europäisches Patentamt**
**European Patent Office**
**Office européen des brevets**

# EUROPÄISCHER RECHERCHENBERICHT

Nummer der Anmeldung

EP 19 21 7061

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 241 810 A1 (SCHOTT AG [DE]) 8. November 2017 (2017-11-08) * Absätze [0056], [0061]; Anspruch 1; Tabelle 1 * ----- | 1-10 | INV. C03C3/087 C03C4/20 |
| X | US 2017/320770 A1 (SCHWALL MICHAEL [DE] ET AL) 9. November 2017 (2017-11-09) * Absatz [0061]; Anspruch 1; Tabelle 1 * ----- | 1-10 | |
| X | EP 2 639 205 A1 (NIPPON ELECTRIC GLASS CO [JP]) 18. September 2013 (2013-09-18) * Absätze [0011], [0043]; Tabelle 1 * ----- | 1-7,9,10 | |

**RECHERCHIERTE SACHGEBIETE (IPC)**

C03C

Der vorliegende Recherchenbericht wurde für alle Patentansprüche erstellt

| Recherchenort | Abschlußdatum der Recherche | Prüfer |
|---|---|---|
| München | 6. Mai 2020 | King, Ruth |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 21 7061

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2020

| Im Recherchenbericht angeführtes Patentdokument | Datum der Veröffentlichung | Mitglied(er) der Patentfamilie | Datum der Veröffentlichung |
|---|---|---|---|
| EP 3241810 A1 | 08-11-2017 | KEINE | |
| US 2017320770 A1 | 09-11-2017 | CN 107344813 A<br>DE 102017102900 A1<br>JP 2017200874 A<br>US 2017320770 A1 | 14-11-2017<br>09-11-2017<br>09-11-2017<br>09-11-2017 |
| EP 2639205 A1 | 18-09-2013 | CN 103201228 A<br>EP 2639205 A1<br>KR 20130041252 A<br>TW 201226352 A<br>US 2013237401 A1<br>WO 2012063643 A1 | 10-07-2013<br>18-09-2013<br>24-04-2013<br>01-07-2012<br>12-09-2013<br>18-05-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0510544 A
- US 9061938 B
- US 9670087 B
- JP H05155638 B
- US 9586854 B
- DE 1816391
- US 4012263 A
- EP 0048120 A
- WO 2013130695 A
- WO 2012103194 A
- WO 0242233 A
- WO 2015009483 A
- DE 102017102900
- DE 102014119594 A1
- DE 102015005836

**In der Beschreibung aufgeführte Nicht-Patentliteratur**

- **CONRADT R.** Chemical structure, medium range order, and crystalline reference state of multicomponent oxide liquids and glasses. *Journal of Non-Crystalline Solids,* 15. Oktober 2004, vol. 345-346, 16-23
- **SUSANNE FAGERLUND ; PAUL EK ; MIKKO HUPA ; LEENA HUPA.** On determining chemical durability of glasses. *Glass Technol.: Eur. J. Glass Sci. Technol. A,* Dezember 2010, vol. 51 (6), 235-240
- *Pure Appl. Chem.,* 1969, vol. 20 (2), 133-236
- **R.H. BYRNE.** Inorganic speciation of dissolved elements in seawater: the influence of pH on concentration ratios. *Geochem. Trans.,* 2002, vol. 3 (2), 11-16
- **DAVID W. HENDRICKS.** Water Treatment Unit Processes: Physical and Chemical. CRC Taylor and Francis, 2006, 307
- **ARTUR KREZEL ; WOLFGANG MARET.** The biological inorganic chemistry of zinc ions. *Archives of Biochemistry and Biophysics,* 2016, 1-17
- **R. BRÜNING.** On the glass transition in vitreous silica by differential thermal analysis measurements. *Journal of Non-Crystalline Solids,* 2003, vol. 330, 13-22
- **ALBERTO GARCIA ; MARVON COHEN.** First Principles Ionicity Scales. *Phys. Rev. B,* 1993
- *Wollastonit: Mineralogical Society of America,* 1963, 293-302
- *Cordierit: American Mineralogist,* 1992, vol. 77, 407-411
- *Anorthit: American Mineralogist,* 1973, vol. 58, 495-499
- *Strontium-Feldspat: American Mineralogist,* 1975, vol. 60, 111-119
- *American Mineralogist,* 1974, vol. 59, 1319-1326
- *Mineralogical Journal,* 1958, vol. 2 (5), 311-332
- *Hardystonit: Zeitschrift für Kristallographie,* 1969, vol. 130, 427-437
- *Titanit: American Mineralogist,* 1976, vol. 61, 238-247
- *Gittinsit: Canadian Mineralogist,* 1989, vol. 27, 703-708
- **C.P. RODRIGUEZ ; J.S. MCCLOY ; M.J. SCHWEIGER ; J.V. CRUM ; A, WINSCHELL.** *Optical Basicity and Nepheline Crystallization in High Alumina Glasses, Pacific Northwest National Laboratories*
- **O.L. ANDERSON ; D.A. STUART.** Calculation of Activation Energy of Ionic Conductivity in Silica Glasses by Classical Methods. *Journal of the American Ceramic Society,* 1954, vol. 37 (12), 573-580
- A Review of the Aqueous Chemistry of the Zirconium-Water System to 200°C. **J.H. ADAIR ; H. KRARUP ; S. VENIGALLA ; T. TSUKADA.** Aqueous Chemistry and Geochemistry of Oxides, Oxyhydroxides, and Related Materials. Materials Research Society, 1997, vol. 432, 101-112
- *Journal of Solution Chemistry,* 2017, vol. 46 (2), 476-487
- **S. SJÖBERG.** Silica in aqueous environments. *Journal of Non-Crystalline Solids,* 1996, vol. 196, 51-57
- **H. FÖLL.** Einführung in die Materialwissenschaft I. Christian Albrechts-Universität Kiel, 79-83
- **R. KNOCHE ; D.B. DINGWELL ; S.L. WEBB.** Temperature-dependent thermal expansivities of silicate melts: The system anorthite-diopside. *Geochimica et Cosmochimica Acta,* 1992, vol. 56, 689-699

- **J. ARNDT ; F. HÄBERLE.** Thermal expansion and glass transition temperatures of synthetic glasses of plagioclase-like compositions. *Contributions to Mineralogy and Petrology,* 1973, vol. 39 (2), 175-183